# EUROPÄISCHE PATENTSCHRIFT

(11) **EP 3 499 199 B1**
(45) Veröffentlichungstag und Bekanntmachung des Hinweises auf die Patenterteilung: **01.09.2021**
(21) Anmeldenummer: 18211014.8
(22) Anmeldetag: 07.12.2018
(51) Int. Cl.: G01G 19/02

(54) **WIM SENSOR UND VERFAHREN ZUR HERSTELLUNG DES WIM SENSORS**
WIM SENSOR AND METHOD FOR MANUFACTURING THE WIM SENSOR
CAPTEUR WIM ET PROCÉDÉ DE FABRICATION DU CAPTEUR WIM

(30) Priorität: 15.12.2017 EP 17207636
(43) Veröffentlichungstag der Anmeldung: 19.06.2019
(73) Patentinhaber: Kistler Holding AG, 8408 Winterthur (CH)
(72) Erfinder: Ribi, Adrian, 8404 Winterthur (CH)

(56) Entgegenhaltungen:
- WO-A1-2013/017768

## Beschreibung

### Technisches Gebiet

Die Erfindung betrifft einen WIM Sensor und ein Verfahren zur Herstellung des WIM Sensors.

### Stand der Technik

Weigh-in-Motion (WIM) Sensoren werden im Transportbereich eingesetzt um unter anderem die Last eines Rades eines Fahrzeuges, kurz Last, zu ermitteln; oder um die Anzahl von Überfahrten von Rädern über einen Fahrbahnabschnitt zu ermitteln. Unter einer Last wird hierbei die Gewichtskraft, kurz Kraft, verstanden, die durch die Masse eines Fahrzeuges durch ein Rad auf einen Fahrbahnabschnitt wirkt. Unter einem Fahrzeug wird ein Fahrzeug oder eine Fahrzeugkombination bestehend aus einem Zugfahrzeug und einem oder mehreren Anhängern bezeichnet.

Mittels der ermittelten Daten können Schritte eingeleitet werden, die unter anderem geeignet sind eine Beschädigung des Fahrbahnabschnittes durch eine Last, welche höher ist als die für den Fahrbahnabschnitt zugelassenen Last, zu vermeiden, nutzungsabhängige Wartungsintervalle der Fahrbahn zu bestimmen, von der Last abhängige oder von der Anzahl Räder eines Fahrzeuges abhängige Zahlungen zu ermitteln und die Verkehrssicherheit zu erhöhen.

WIM Sensoren sind in den Fahrbahnbelag eines Fahrbahnabschnittes eingefügt, wobei eine Fahrspur eines Fahrzeuges in Längsrichtung zur Fahrtrichtung durch mehrere, längs zur Fahrtrichtung nebeneinander in den Fahrbahnbelag eingebrachte WIM Sensoren durchquert ist, wobei je ein WIM Sensor eine Radspur eines Fahrzeuges durchquert, wobei der WIM Sensor so in den Fahrbahnbelag des Fahrbahnabschnittes angeordnet ist, dass er mit der Oberfläche des Fahrbahnbelags des Fahrbahnabschnittes eine Ebene bildet. Der WIM Sensor ist im Allgemeinen als längliches Profil ausgeführt.

Unter der Radspur wird dabei die Trajektorie eines Rades des Fahrzeuges auf dem Fahrbahnbelag bei Überfahrt des Fahrzeuges verstanden. Unter der Fahrspur wird die Gesamtheit aller Radspuren des Fahrzeuges verstanden.

Es ist auch eine Ausführungsform bekannt, in der die komplette Fahrspur des Fahrzeuges durch einen einzelnen langen WIM Sensor durchquert wird.

Es gibt verschiedene Typen von Rädern, die an verschiedenen Fahrzeugen genutzt werden. So gibt es die Radtypen Einzelrad, Doppelrad oder Super-Single Rad. Um bei der Überfahrt eines Fahrzeuges zwischen einem Rad, Doppelrad oder Super-Single Rad zu unterscheiden, müssen im WIM Sensor einzelne piezoelektrische Messelemente in einem geeignet geringen Abstand entlang seiner Längsachse angeordnet sein; wobei die piezoelektrischen Messelemente ein Signal proportional zu der auf sie wirkenden Kraft erzeugen. Die Signale dieser piezoelektrischen Messelemente müssen einzeln erfasst werden und einzeln in eine Auswertung einfliessen, welche den Radtyp bestimmt.

Ein piezoelektrisches Messelement eines WIM Sensors ist typischerweise ein piezoelektrisches Material, auf dessen Aussenflächen sich eine zu einem auf das piezoelektrische Material wirkenden Last proportionale elektrische Ladung aufbaut. Unter einem Ladungssignal werden elektrische Ladungen verstanden, die von den Flächen des piezoelektrischen Materials durch geeignete elektrische Leiter geleitet werden. Dieses Ladungssignal wird in einem Ladungsverstärker verstärkt und in ein Ladungsverstärkersignal gewandelt.

Die Erfassung der Ladungssignale einzelner piezoelektrischer Messelemente oder piezoelektrischer Messelementgruppen ist daher mit einem bedeutenden Aufwand verbunden. So müssen für jedes piezoelektrische Messelement oder jede piezoelektrische Messelementgruppe ein Ladungsverstärker bereitgestellt werden. Zudem muss jedes Ladungsverstärkersignal separat zu einer elektronischen Auswerteeinheit geführt werden.

Eine eindeutige Charakterisierung der Radtypen überfahrender Räder ist unter anderem für künftige Anwendungen von WIM Sensoren unerlässlich, auch für eine Bestimmung des zum Rad gehörenden Fahrzeugtyps. Diese Anwendungen umfassen nicht abschliessend:
- Erfassen eines Fahrzeugtyps
- Direkte Bestrafung von überladenen Fahrzeugen auf Grund des zulässigem Gesamtgewicht des Fahrzeugtyps, basierend auf einer WIM Messung bei voller Reisegeschwindigkeit.
- Direkte Bestrafung von Fahrzeugen mit überhöhter Geschwindigkeit auf Grund der zulässiger Höchstgeschwindigkeit des Fahrzeugtyps, basierend auf einer WIM Messung bei voller Reisegeschwindigkeit.
- Konsistenzprüfung von in einem Mautsystem hinterlegten Daten zum Fahrzeugtyp des Fahrzeugs.
- Lastabhängige Mautzahlung nach Fahrzeugtyp, basierend auf einer WIM Messung bei voller Reisegeschwindigkeit.
- Lastabhängige Zahlung nach Fahrzeugtyp, basierend auf einer WIM Messung in industriellen Anwendungen (Hafen, Minen, Kieswerk, etc.).

Für die genannten Punkte werden hohe Anforderungen an die Messgenauigkeit von WIM Systemen gestellt. So ist in einer Empfehlung der Internationalen Organisation für das gesetzliche Messwesen (OIML) in Norm OIML R-134 eine Klassierung von WIM Systemen nach Messgenauigkeit angegeben. Die Angabe der Messgenauigkeit und eine Einstufung in eine hohe Genauigkeitsklasse sind für die Nutzung von WIM Sensoren in den oben genannten Anwendungen von ausserordentlicher Bedeutung.

Aus US5265481A ist ein WIM Sensor bekannt mit einer Anzahl in einem Hohlprofil in Längsrichtung angeordneter piezoelektrischer Messelemente, kurz Piezoelemente; wobei die Piezoelemente an eine Signalverarbeitung derart angeschlossen sind, dass eine Kontaktierung eines einzelnen Piezoelements, oder einer Gruppe von Piezoelementen in Parallelschaltung möglich ist; wobei ein Piezoelement aus Piezoscheiben zwischen Krafteinleitsegmenten besteht. Des Weiteren ist aus US5265481A ein Montageverfahren bekannt, in dem aus einer Folie, den darauf montierten Piezoelementen und den Signalleitern zu den Piezoelementen eine elastische Kette gebildet wird, welche in ein aufgespanntes Hohlprofil eingezogen wird. In dem Hohlprofil können seitlich neben einem Piezoelement elektronische Komponenten, wie ein Vorverstärker, angeordnet sein.

Nachteilig ist hierbei der mehrteilige Aufbau eines Piezoelements bestehend aus einem Krafteinleitsegment, einer Piezoscheibe, einer elektrisch leitenden Folie, einer weiteren Piezoscheibe, und einem weiteren Krafteinleitsegment, die jeweils mit Klebstoff verbunden sind. Eine Zusammenstellung mit mehreren Piezoelementen, die auf der elektrisch leitenden Folie angeordnet sind, wird elastische Kette genannt. Die elastische Kette erlaubt eine Montage durch das Einziehen der elastischen Kette in das Hohlprofil. Die elastischen Eigenschaften des Klebstoffes sind nachteilig für die Messgenauigkeit und Linearität des Signals des Piezoelements. Des Weiteren ist ein Einbringen von elektronischen Komponenten zusätzlich zu den Piezoelementen schwierig, da diese synchron eingesetzt werden müssen um ein Abreissen von Signalkabeln zwischen den Piezoelementen und den elektronischen Komponenten zu verhindern. Des Weiteren müssen von jedem Piezoelement separate Kabel durch das Hohlprofil geführt werden, um Signale einzelner Piezoelemente auswerten zu können. Diese Kabel verkomplizieren das Einziehen der elastischen Kette aus Piezoelementen in das Hohlprofil. Der komplexe Einbau ist mit einem Mehraufwand und hohen Kosten verbunden.

Unter einer Messgenauigkeit wird im Folgenden die Messgenauigkeit bei der Ermittlung der von einem Rad eines überfahrenden Fahrzeuges auf ein piezoelektrisches Messelement eines WIM Sensors wirkenden Radlast verstanden. Eine Erhöhung der Messgenauigkeit wird durch eine Reduzierung systematischer Fehler bei der Ermittlung der Radlast und/oder einer Reduzierung der Streuung der mehrfach ermittelten Radlast eines gleichen Rad erreicht.

Aus der WO2013017768A1 ist eine Anordnung piezoelektrischer Sensoren auf einem Träger bekannt. Die einzelnen Sensoren weisen jeweils eine Rollplatte auf, welche eine auf die Rollplatte wirkende Kraft auf ein Messelement überträgt. Um eine gegenseitige Wechselwirkung zu vermeiden sind die Sensoren auf dem Träger voneinander beabstandet. Die Sensoren ermitteln eine wirkende Kraft unabhängig voneinander.

Eine erste Aufgabe der vorliegenden Erfindung liegt in einer effizienten Ausnutzung des Raumes im Hohlprofil des WIM Sensors. Eine weitere Aufgabe liegt darin, die Messgenauigkeit des WIM Sensors zu erhöhen. Eine weitere Aufgabe liegt darin, ein kostengünstiges Herstellungsverfahren aufzuzeigen, mit einem einfachen und funktionalen Aufbau des WIM Sensors.

### Darstellung der Erfindung

Zumindest eine dieser Aufgaben wird durch die Merkmale des unabhängigen Anspruchs gelöst.

Die Erfindung betrifft einen WIM Sensor zur Ermittlung von Radlasten eines Fahrzeugs auf einem Fahrbahnabschnitt bei der Überfahrt eines Rades des Fahrzeuges; welcher WIM Sensor im Fahrbahnabschnitt in der Fahrbahnoberfläche abschliessend mit der Fahrbahnoberfläche des Fahrbahnabschnitts angeordnet ist; welcher WIM Sensor als ein entlang einer Längsachse mit länglicher Ausdehnung ausgestaltetes Hohlprofil ausgeführt ist; welches Hohlprofil mindesten einen ersten Raum umschliesst; in welchem ersten Raum mehrere piezoelektrische Messelemente entlang der Längsachse angeordnet sind; welche piezoelektrischen Messelemente jeweils eine erste Kraftaufnahmefläche und eine zweite Kraftaufnahmefläche aufweisen; auf welche piezoelektrischen Messelemente Radlasten bei Überfahrt des Rades des Fahrzeuges wirken; wobei jedes piezoelektrische Messelement zur wirkenden Radlast proportionale elektrische Ladungen auf der ersten Kraftaufnahmefläche und auf der zweiten Kraftaufnahmefläche generiert; wobei im ersten Raum mindestens ein Trägerelement angeordnet ist; wobei das Trägerelement mindestens ein piezoelektrisches Messelement fixiert; wobei im ersten Raum mindestens ein Elektronikelement angeordnet ist; wobei das Trägerelement mindestens ein Elektronikelement fixiert; wobei im ersten Raum mindestens ein elektrischer Ladungsleiter angeordnet ist; wobei der elektrische Ladungsleiter mindestens eine Kraftaufnahmefläche und das Elektronikelement elektrisch verbindet; und wobei der elektrische Ladungsleiter ein Ladungssignal von mindestens einer Kraftaufnahmefläche zum Elektronikelement leitet.

Unter dem Ladungssignal wird die im elektrischen Ladungsleiter geleitete elektrische Ladung verstanden.

Eine Erkennung eines Radtyps, wie beispielsweise ein einfaches Rad, ein Doppelrad oder ein Super-Single-Rad, setzt einen geeignet geringen Abstand von unter 70 mm, vorteilhafterweise 50 mm, der einzelnen piezoelektrischen Messelemente oder piezoelektrischen Messelementgruppen in Längsrichtung des WIM Sensors voraus sowie eine Auswertung der Signale der einzelnen piezoelektrischen Messelemente oder piezoelektrischen Messelementgruppen. Unter der Längsrichtung wird hierbei die Richtung der grössten Dimension des WIM Sensors verstanden; wobei der WIM Sensor typischerweise so in der Fahrbahn angeordnet ist, dass seine Längsrichtung einer Richtung quer zur Fahrspur eines Rades entspricht. Die notwendige hohe Anzahl an Ladungsverstärkern, je einer pro piezoelektrischem Messelement, muss möglichst platzsparend untergebracht sein. Hierfür wird der freie Raum zwischen den einzelnen piezoelektrischen Messelementen genutzt, in welchem in vorteilhafter Ausführungsform ein Elektronikelement angeordnet ist. Die platzsparende Anordnung der Elektronikelemente zusammen mit den piezoelektrischen Messelementen in einem Raum des Hohlprofils wird in vorteilhafter Ausführungsform durch eine Fixierung des Elektronikelements zwischen den einzelnen piezoelektrischen Messelementen mittels eines Trägerelements realisiert. Auch sind die piezoelektrischen Messelemente mittels des Trägerelements fixiert.

Auf dem Elektronikelement ist dabei mindestens ein Ladungsverstärker und mindestens ein Analog zu Digital Wandler, kurz A/D-Wandler, angeordnet. In bevorzugter Ausführungsform sind auf dem Elektronikelement eine Anzahl von Ladungsverstärkern und A/D-Wandlern angeordnet, die der Anzahl der angrenzenden piezoelektrischen Messelemente entspricht.

Eine Optimale Ausnutzung des Raumes wird auch dadurch erreicht, dass das Ladungssignal eines jeden piezoelektrischen Messelements oder einer jeden piezoelektrischen Messelementgruppe mittels Ladungsverstärker in ein proportionales Spannungssignal gewandelt wird und mittels A/D-Wandler, in ein digitales Ladungssignal gewandelt wird. Unter einer piezoelektrischen Messelementgruppe wird hierbei eine Gruppe bestehend aus einem oder mehreren piezoelektrischen Messelementen verstanden, die elektrisch parallel verbunden sind und die bei Belastung ein einzelnes, gemeinsames Signal generieren.

In einem Auswerteelement, welches im WIM Sensor angeordnet ist, müssen eine Vielzahl von Ladungssignalen, je eines pro piezoelektrischen Messelement oder piezoelektrischer Messelementgruppe, verfügbar sein. Auf Grund der Eigenschaften einer digitalen Datenübertragung wird die Anzahl der für die Übertragung genutzten elektrischen Signalleiter gegenüber der analogen Übertragung der Ladungssignale der einzelnen piezoelektrischen Messelemente aus US5265481A reduziert. Digitale Signale haben insbesondere den Vorteil gegenüber analogen Signalen, wie sie in US5265481A verwendet werden, dass verschiedene Signale über gleiche elektrische Signalleiter geführt werden können. Es werden vorteilhafterweise mehrere digitale Ladungssignale, die von verschiedenen piezoelektrischen Messelementen oder piezoelektrischen Messelementgruppen stammen, über die gleichen elektrischen Signalleiter durch den WIM Sensor zu einem Auswerteelement geführt. Durch die so realisierte Reihenschaltung von piezoelektrischen Messelementen werden Engpässe im Profil vermieden, wie sie in US5265481A nahe Orten an denen piezoelektrische Messelemente angeordnet sind vorkommen. Dadurch ist eine bessere Ausnutzung des Raumes im Hohlprofil des WIM Sensors gegeben.

Eine Erhöhung der Messgenauigkeit des WIM Sensors gegenüber US5265481A wird durch eine Kalibrierung der einzelnen piezoelektrischen Messelemente des WIM Sensors erreicht. Dies ist vorteilhaft, da bei einer Kalibrierung eines WIM Sensors mit nur einer Kalibrierfunktion des gesamten WIM Sensors systematische Messfehler dadurch auftreten, dass ein Rad den WIM Sensor nicht zwingend an der gleichen Stelle bezüglich der Längsrichtung des WIM Sensors quert und dadurch charakteristische Sensitivitäten, Linearitäten und Hysterese der einzelnen, auf der Längsachse des WIM Sensors angeordneten piezoelektrischen Messelementen einen Einfluss auf das Messergebnis haben.

Das digitale Ladungssignal eines jeden piezoelektrischen Messelements oder einer jeden piezoelektrischen Messelementgruppe wird in einem Auswerteelement durch eine Kalibrierfunktion kalibriert.

Für eine Kalibrierung wird in einer weiteren Ausführungsform mindestens ein digitales Messfühlersignal mindestens eines im WIM Sensor angeordneten Messfühlers verwendet.

Eine Erhöhung der Messgenauigkeit des WIM Sensors wird auch durch die räumliche Nähe eines Elektronikelements mit Ladungsverstärker zu einem piezoelektrischen Messelement gegeben. Lange Leitungen erhöhen das Auftreten von Störsignalen und Rauschen. So muss die Länge der elektrischen Ladungsleiter, die von einer Fläche eines piezoelektrischen Messelements zu einem Ladungsverstärker führen so kurz wie möglich gewählt sein, vorteilhafterweise kürzer als 20 mm. Dies vermindert das Auftreten störender Signale und wird durch die räumlich nahe Fixierung des Elektronikelements auf einem Trägerelement zwischen den jeweiligen piezoelektrischen Messelementen realisiert.

Vorteilhafterweise befindet sich ein A/D-Wandler unmittelbar am Ausgang des Ladungsverstärkers; wobei der A/D-Wandler das Spannungssignal des Ladungsverstärkers in ein digitales Ladungssignal wandelt, welches weniger anfällig für externe Störsignale ist.

Eine einfache Montage wird durch ein Trägerelement ermöglicht; wobei das Trägerelement mindestens ein piezoelektrisches Messelement fixiert; und wobei das Trägerelement mindestens ein Elektronikelement fixiert. Mindestens zwei Trägerelemente sind zu einem Träger verbindbar. Piezoelektrische Messelemente und Elektronikelemente eines WIM Sensors können mittels des Trägers in einem Stück auf einfache Weise in ein Hohlprofil eingezogen werden.

### Kurze Beschreibung der Zeichnungen

Im Folgenden wird die Erfindung beispielhaft unter Beizug der Figuren näher erklärt. Es zeigen
- Fig. 1: eine schematische Teilansicht eines Fahrbahnabschnittes mit darin angeordneten WIM Sensoren;
- Fig. 2: eine schematische Schnittansicht eines WIM Sensors in vorteilhafter Ausführungsform;
- Fig. 3: eine schematische Teilansicht eines Trägerelements in einer ersten Ausführungsform;
- Fig. 4: eine schematische Teilansicht eines Trägerelements in einer zweiten Ausführungsform;
- Fig. 5: eine schematische Teilansicht eines Trägerelements in einer dritten Ausführungsform;
- Fig. 6: eine schematische Schnittansicht eines Teils eines Trägerelements in einer Ausführungsform, wobei zwischen den einzelnen Elementen zur besseren Übersicht ein Abstand bezüglich der Achse Y-Y` eingefügt wurde;
- Fig. 7: eine schematische Schnittansicht eines Teils eines WIM Sensors in vorteilhafter Ausführungsform, wobei das Trägerelement zur besseren Übersichtlichkeit nicht gezeigt ist;
- Fig. 8: eine schematische Darstellung der elektrischen Signalleiter eines WIM Sensors in einer bevorzugten Ausführungsform, welche elektrischen Signalleiter Auswerteelement und mindestens ein Elektronikelement und mindestens einen Messfühler elektrisch verbinden; und elektrische Ladungsleiter eines WIM Sensors in einer bevorzugten Ausführungsform, welche elektrischen Ladungsleiter piezoelektrische Messelemente mit einem Elektronikelement verbinden;
- Fig. 9: eine schematische Darstellung der Abläufe im Auswerteelement,
- Fig. 10: eine schematische Darstellung eines Trägers.

### Wege zur Ausführung der Erfindung

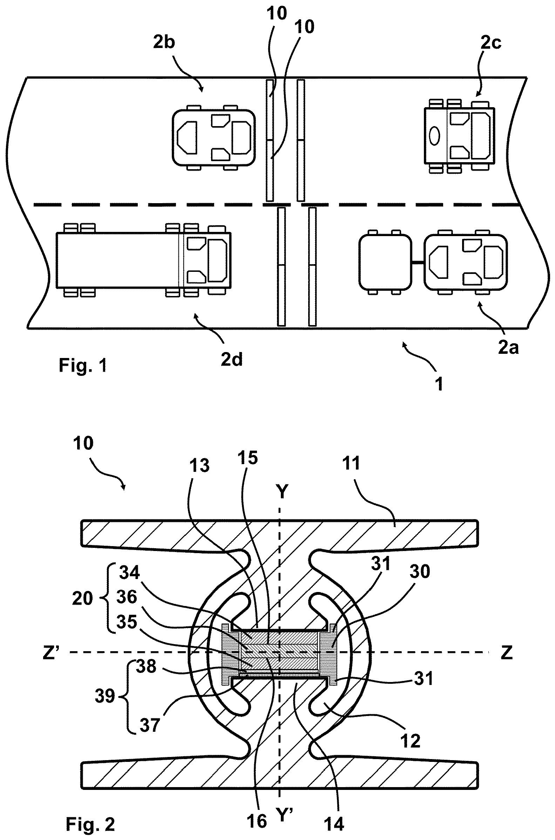

Fig. 1 zeigt einen Fahrbahnabschnitt 1 mit darin angeordneten WIM Sensoren 10 zur Ermittlung von Radlasten eines den WIM Sensor überfahrenden Fahrzeugs 2a, 2b, 2c, 2d.

Fig. 2 zeigt eine schematische Schnittansicht eines WIM Sensors 10 in vorteilhafter Ausführungsform. Die Achse Y-Y` ist parallel zur Höhe des Hohlprofils 11 und senkrecht zur Fahrbahnoberfläche. Die Achse Z-Z` ist parallel zur Breite des Hohlprofils 11 und parallel zur nominellen Fahrtrichtung der das Profil überfahrenden Fahrzeuge 2a, 2b, 2c, 2d. Senkrecht zu Y-Y` und Z-Z` liegt die Achse X-X`, die nicht in Fig. 2 gezeigt ist und parallel zur Länge des Hohlprofils 11 ist. Die Achsen X-X`, Y-Y` und Z-Z` bilden ein orthogonales Koordinatensystem. Die in Fig. 2 gezeigte Schnittebene ist gegeben durch die Achsen Y-Y` und Z-Z'. Das Hohlprofil 11 zeigt in vorteilhafter Ausführungsform einen Raum 12 und eine erste Pressfläche 13 und eine zweite Pressfläche 14, welche Pressflächen 13, 14 gegenüberliegend, beabstandet und senkrecht zu Y-Y` angeordnet sind.

Das Hohlprofil 11 ist in bevorzugter Ausführungsform aus einem Metall oder einer Metalllegierung ausgeführt. In einer weiteren Ausführungsform ist das Hohlprofil 11 aus einem Kunststoff oder einem Verbundwerkstoff ausgeführt.

Der Raum 12 des Hohlprofils 11 weist des Weiteren eine piezoelektrische Messelementanordnung 20 auf; wobei eine piezoelektrische Messelementanordnung 20 ein piezoelektrisches Messelement 36 und eine erstes Krafteinleitelement 34 und ein zweites Krafteinleitelement 35 ausweist.

Das piezoelektrische Messelement 36 weist eine erste Kraftaufnahmefläche 15 und eine zweite Kraftaufnahmefläche 16 auf, welche erste Kraftaufnahmefläche 15 und zweite Kraftaufnahmefläche 16 jeweils einer ersten Pressfläche 13, respektive zweiten Pressfläche 14 zugewandt ist. In vorteilhafter Ausführungsform sind piezoelektrische Messelemente 36 Einkristalle, in bevorzugter Ausführungsform Quarze.

Zwischen der ersten Pressfläche 13 und der ersten Kraftaufnahmefläche 15 ist das erste Krafteinleitelement 34 angeordnet. Zwischen der zweiten Pressfläche 14 und der zweiten Kraftaufnahmefläche 16 ist das zweite Krafteinleitelement 35 angeordnet. Das Krafteinleitelement 34, 35 ist ganz oder teilweise aus einem elektrisch leitenden Material ausgeführt, wie beispielsweise Metall, Metalllegierungen, Kristall oder Keramik mit einer elektrisch leitenden Schicht, welche auf den Kristall oder die Keramik stoffschlüssig aufgebracht ist.

Durch das Krafteinleitelement 34, 35 wirkt eine Kraft von der Pressfläche 13, 14 indirekt auf die Kraftaufnahmefläche 15, 16.

In einer weiteren Ausführungsform weist die piezoelektrische Messelementanordnung 20 ausschliesslich ein piezoelektrisches Messelement 36 auf. Folgende Erläuterungen sind für diese Ausführungsform so zu verstehen, dass durch das entfallen der Krafteinleitelemente 34, 35 entsprechende Grössen, Elemente oder Eigenschaften direkt auf die Kraftaufnahmeflächen 15, 16 des piezoelektrischen Messelements 36 wirken.

Zwischen mindestens einer Pressfläche 13, 14 und einer Kraftaufnahmefläche 15, 16 ist eine Elektrodenfolie 39 angeordnet; wobei die Elektrodenfolie 39 eine lang ausgeführte, streifenförmige Isolierfolie 37 aus einem nicht elektrisch leitenden Material ist, welche auf mindestens einer ihrer beiden Flächen mit einer elektrisch leitenden Schicht 38 versehen ist. Als elektrisch leitende Schicht 38 wird vorteilhafterweise ein Stoff oder eine Kombination aus folgenden Stoffen verwendet: Chrom, Kupfer, Zirkonium, Gold, Silber, Platin, Stahl. Als Isolierfolie 37 wird vorteilhafterweise eine Polyimidfolie verwendet.

Die elektrisch leitende Schicht 38 ist dauerhaft mechanisch mit der Isolierfolie 37 verbunden. Die mechanische Verbindung kann durch verschiedene Verfahren geschehen. So kann die elektrisch leitende Schicht 38 auf die Isolierfolie 37 auflaminiert sein; wobei unter einer Laminierung ein stoffschlüssiges, thermisches Fügeverfahren verstanden wird. Des Weiteren kann die elektrisch leitende Schicht 38 durch ein Klebemittel zwischen der Schicht und der Isolierfolie 37 mit der Isolierfolie 37 stoffschlüssig verbunden sein. Des Weiteren kann die elektrisch leitende Schicht 38 mit der Isolierfolie 37 stoffschlüssig verbunden werden, indem die Isolierfolie 37 durch Druck oder Wärmezufuhr in einen viskosen Zustand gebracht wird, in welchem sich die elektrisch leitende Schicht 38 mit der Isolierfolie 37 stoffschlüssig verbindet. In bevorzugter Ausführungsform wird die elektrisch leitende Schicht 38 durch thermisches Aufdampfen, Kathodenzerstäubung oder galvanisches Beschichten auf die Isolierfolie 37 aufgebracht.

Die elektrisch leitende Schicht 38 weist auf mindestens einer Seite der Isolierfolie 37 eine Struktur auf, wobei die Struktur derart gestaltet ist, dass verschiedene elektrisch leitende Bereiche 38a, 38b der elektrisch leitenden Schicht 38 existieren, die untereinander elektrisch isoliert sind. Die Struktur der elektrisch leitenden Schicht wird durch selektives Auftragen der Schicht auf definierte Bereiche der Isolierfolie 37 realisiert oder es wird zunächst eine durchgängige elektrisch leitende Schicht 38 auf die Isolierfolie 37 aufgebracht, in die in einem weiteren Arbeitsschritt die Struktur eingebracht wird. So können elektrisch leitende Bereiche 38a, 38b der elektrisch leitenden Schicht 38 durch mechanische Verfahren oder selektives Ätzen der elektrisch leitenden Schicht 38 entfernt werden.

Selbstverständlich kann der Fachmann auch eine Kombination der erwähnten Verfahren verwenden, um die stoffschlüssige Verbindung zwischen Isolierfolie 37 und elektrisch leitender Schicht 38 zu realisieren.

Selbstverständlich kann der Fachmann auch eine Kombination der erwähnten Verfahren verwenden um eine Struktur in die elektrisch leitende Schicht 38 der Elektrodenfolie 39 zu realisieren.

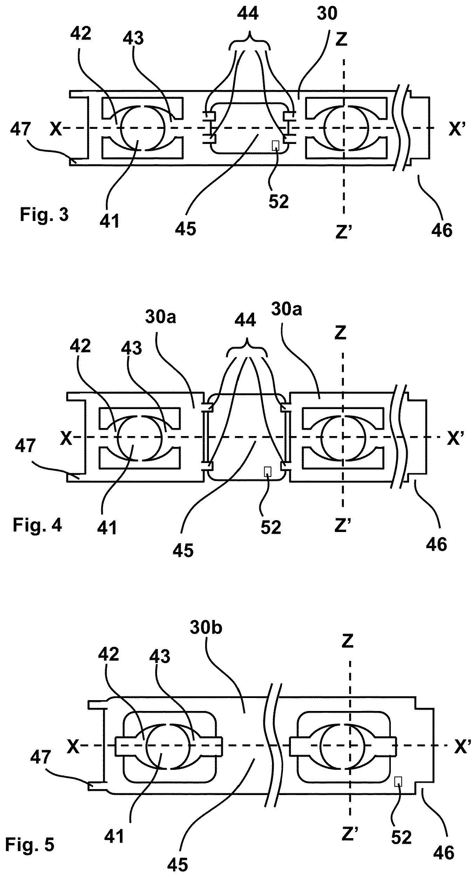

Der Raum 12 des Hohlprofils weist in vorteilhafter Ausführungsform ein Trägerelement 30 auf. Eine erste Ausführungsform des Trägerelements 30 ist in Fig. 3 schematisch dargestellt.

Das Trägerelement 30 ist entlang der Achse X-X` lang ausgestaltet und vorteilhafterweise entlang der Achse Z-Z` breiter als die piezoelektrische Messelementanordnung 20 und in einem ersten Raum 12 des Hohlprofils 11 angeordnet.

Das Trägerelement 30 weist in vorteilhafter Ausführungsform mindestens eine Aussparung 41 auf, die das Trägerelement 30 entlang der Achse Y-Y` durchsetzt; wobei die Aussparung 41 Halteklammern 42, 43 aufweist, welche Halteklammern 42,43 eine piezoelektrische Messelementanordnung 20 bezüglich des Trägerelements 30 fixieren.

In vorteilhafter Ausführungsform weist das Trägerelement 30 mindestens ein Halteelemente 44 auf; wobei ein Halteelement 44 ein Elektronikelement 45 mit dem Trägerelement 30 mechanisch fest verbindet; wobei die Verbindung formschlüssig oder kraftschlüssig ausgeführt ist. So ist in einer Ausführungsform das Elektronikelement 45 mittels Halteelementen 44 in Form von flexiblen Haken mit dem Trägerelement 30 mechanisch fest verbunden. In einer weiteren Ausführungsform ist das Elektronikelement 45 mittels Halteelementen 44 in Form von Schrauben, Schraubdurchführungen im Trägerelement 30 und Muttern; oder in Form von Schrauben und Gewindebohrungen im Trägerelement 30, mit dem Trägerelement 30 mechanisch fest verbunden.

In einer weiteren Ausführungsform ist das Elektronikelement 45 mit dem Trägerelement 30 stoffschlüssig verbunden, beispielsweise mit einem geeigneten Klebstoff, wobei keine Halteelemente 44 notwendig sind.

In einer zweiten Ausführungsform, welche in Fig. 4 schematisch gezeigt ist, ist das Trägerelement 30a in mindestens zwei Teilen ausgeführt, wobei die einzelnen Teile des Trägerelements 30a durch die Halteelemente 44 mit dem Elektronikelement 45 mechanisch verbunden sind. In vorteilhafter Ausführungsform weist das Elektronikelement 45 einen mechanisch starren Aufbau, beispielsweise eine Platine auf. Das Elektronikelement 45 ist in dieser Ausführungsform des Trägerelements 30a ein struktureller Bestandteil des Trägerelements 30a.

Wie in Fig. 5 dargestellt ist in einer dritten Ausführungsform das Trägerelement 30b zu einem überwiegendem Teil aus einem Elektronikelement 45, beispielsweise einer Platine, mit mindestens einer Aussparung 41 ausgeführt. Die Aussparung 41 im Elektronikelement 45 weist Halteklammern 42, 43 auf, die mit dem Elektronikelement 45 stoffschlüssig, formschlüssig oder kraftschlüssig verbunden sind. Die Halteklammern 42, 43 fixieren die piezoelektrische Messelementanordnung 20 bezüglich des Trägerelements 30b.

In einer vorteilhaften Ausführungsform weist das Trägerelement 30, 30a, 30b, wie in Fig. 3, Fig. 4, und Fig. 5 dargestellt, an den jeweiligen Enden des Trägerelements 30, 30a, 30b bezüglich der Achse X-X` Verbindungselemente 46, 47 auf; wobei die Verbindungselemente 46, 47 in gezeigter Ausführungsform in Form von zapfenförmigen Verbindungselementen 47 und schlitzförmigen Verbindungselementen 46 ausgeführt sind; wobei die Verbindungselemente 46, 47 Trägerelemente 30, 30a, 30b formschlüssig verbinden.

In einer weiteren Ausführungsform weist das Trägerelement 30, 30a 30b Verbindungselemente zur kraftschlüssigen Verbindung von Trägerelementen 30, 30a 30b auf. Eine kraftschlüssige Verbindung von Trägerelementen erfolgt beispielsweise durch Schraubverbindungen.

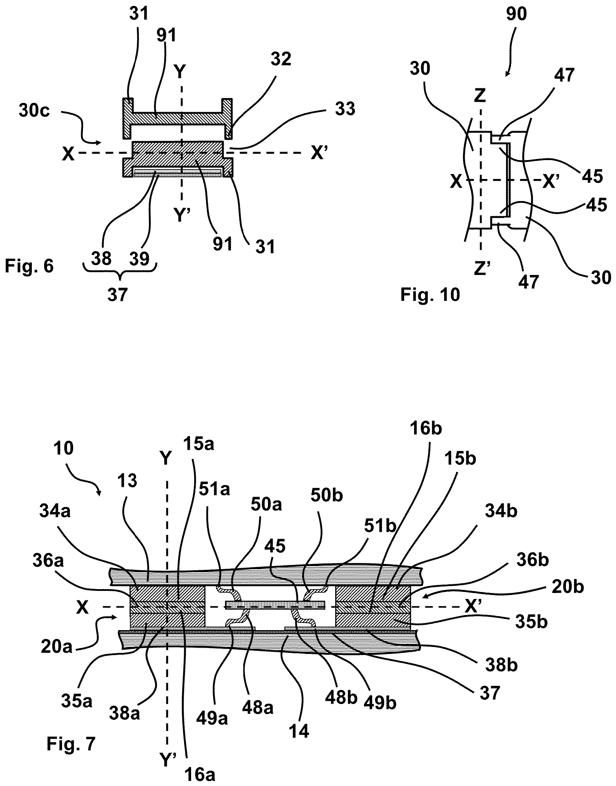

In einer weiteren Ausführungsform ist ein Trägerelement 30c aus mehreren Trägerelementteilen 91 zusammengefügt, wobei die Verbindung mehrerer Trägerelementteile 91 durch Formschluss, Kraftschluss oder Stoffschluss erfolgt. So ist beispielsweise in Fig. 6 schematisch ein Trägerelement 30c dargestellt, welches aus zwei Trägerelementteilen 91 besteht; wobei die Trägerelementteile 91 durch Teilverbindungselemente 32, 33 kraftschlüssig oder formschlüssig verbindbar sind. Teilverbindungselemente 32, 33 sind in gezeigter Ausführungsform in Form von Zapfen 32 und Schlitzen 33 ausgeführt, die formschlüssig verbindbar sind.

Teilverbindungselemente 32, 33 können in einer weiteren Ausführungsform auch als Schraubverbindung ausgeführt sein.

Es ist auch eine Ausführungsform denkbar, in der Trägerelementteile 91 mittels stoffschlüssiger Verbindung verbunden sind. Dabei entfallen entsprechende Teilverbindungselemente 32, 33.

Die Gesamtheit aller in einem Hohlprofil kraftschlüssig, formschlüssig oder stoffschlüssig verbundenen Trägerelemente 30 wird im Folgenden als Träger 90 bezeichnet, welcher in Fig. 10 dargestellt ist.

Selbstverständlich sind auch weitere Ausführungsformen eines Trägerelements 30 denkbar. Der Fachmann kann beispielsweise eine Kombination aus den in Fig. 3 bis Fig. 5 gezeigten Ausführungsformen verwenden, weitere Elemente zur Erhöhung der Stabilität eines Trägerelements 30 einfügen oder Elemente in einer anderen Position anordnen. So ist es denkbar das Elektronikelement 45 nicht wie beschrieben in der durch X-X`, Z-Z` beschrieben Ebene sondern in der durch X-X', Y-Y` beschriebene Ebene, seitlich an einem Trägerelement 30, anzuordnen.

Das Trägerelement 30, 30a, 30b, 30c weist in vorteilhafter Ausführungsform Führungselemente 31 auf, die eine Montage eines Trägers vereinfachen, wie in Fig. 2 dargestellt.

Ein Träger 90 vereinfacht das Verfahren der Montage eines WIM Sensors 10 erheblich. Ein WIM Sensor 10 wird vorteilhaft nach einem im Folgenden beschriebenen Verfahren montiert: Ein Träger 90, bestehend aus verbindbaren Trägerelementen 30, 30a, 30b, 30c, wird jeweils mit mindestens einer piezoelektrischen Messelementanordnung 20 20a, 20b und mindestens einem Elektronikelement 45, ausserhalb des Hohlprofils 11 vormontiert. Die Vormontage umfasst weiterhin eine elektrische Verbindung aller Elektronikelementen 45 eines WIM Sensors 11 mittels Anschlusselement 52 und elektrischer Signalleiter 60.

Des Weiteren wird die Elektrodenfolie 39 so in ein geeignetes Element des Trägers eingelegt, dass die Elektrodenfolie 39 nicht seitlich bezüglich der Achse Z-Z` verrutscht. Die Funktion eines solchen Elements erfüllen beispielsweise die Führungselemente 31.

Ein vormontierter Träger 90 wird in ein aufgespanntes Hohlprofil 11 zusammen mit mindestens einer Elektrodenfolie 39 eingezogen; wobei der Abstand der Pressflächen 13, 14 des Hohlprofil 11 durch eine seitliche Krafteinwirkung entlang der Achse Z-Z` auf das Hohlprofil 11 vergrössert wird. Die Führungselemente 31 ermöglichen ein einfaches Einziehen des Trägers in das Hohlprofil und gewährleisten eine präzise Positionierung des Trägers und der Elektrodenfolie 39 im Hohlprofil.

Das Trägerelement 30, 30a, 30b, 30c hat vorteilhafterweise eine Länge entlang der Achse X-X` zwischen 100 mm und 1000 mm, in besonders vorteilhafter Ausführung zwischen 100 mm und 300 mm. In besonders vorteilhafter Ausführungsform ist das Trägerelement 30, 30a, 30b, 30c daher zur Montage von Trägern 90 verschiedener Länge und damit für verschiedene Bauformen bezüglich der Länge eines WIM Sensors 10 nutzbar. Dies verringert die Fertigungskosten eines WIM Sensors 10.

In Fig. 7 ist ein Teil eines fertig montierten WIM Sensors 10 in einer schematischen Schnittansicht gezeigt, wobei das Trägerelement 30 30a, 30b, 30c aus Gründen der Übersichtlichkeit nicht dargestellt ist. Das Elektronikelement 45 weist in einer vorteilhaften Ausführungsform auf seiner Unterseite bezüglich der Achse Y-Y` mindestens einen Federkontakt 48a, 48b auf; wobei der Federkontakt 48a, 48b fest mit dem Elektronikelement 45 verbunden ist und eine Federkontaktfläche 49a, 49b mit einer definierten Federkraft im montierten Zustand des WIM Sensors 10 gegen eine Fläche drückt, beispielsweise einen elektrisch leitendem Bereich 38a, 38b der strukturierten Elektrodenfolie 39.

Des Weiteren weist das Elektronikelement 45 in einer vorteilhaften Ausführungsform auf seiner Oberseite bezüglich der Achse Y-Y` mindestens einen Federkontakt 50a, 50b auf, wobei der Federkontakt 50a, 50b fest mit dem Elektronikelement 45 verbunden ist und eine Federkontaktfläche 51a, 51b mit einer definierten Federkraft im montierten Zustand des WIM Sensors 10 gegen eine Fläche drückt, beispielsweise eine Pressfläche 13 des Hohlprofils 11.

Die Federkontakte 48a, 50a stellen durch das Andrücken der Federkontaktflächen 49a, 51a eine elektrische Verbindung zwischen dem Elektronikelement 45 und der piezoelektrischen Messelementanordnung 20a her. In vorteilhafter Ausführungsform werden bei einer Krafteinwirkung auf das piezoelektrische Messelement 36a die auf einer zweiten Kraftaufnahmefläche 16a auftretenden elektrischen Ladungen über das Krafteinleitelement 35a, über den elektrisch leitenden Bereich 38a der Elektrodenfolie und über das Federelement 48a zum Elektronikelement 45 abgeleitet. Das Krafteinleitelement 35a, der elektrisch leitende Bereich 38a der Elektrodenfolie und das Federelement 48a sind so ein Ladungsleiter 61a. Die bei einer Krafteinwirkung auf das piezoelektrische Messelement 36a auf einer ersten Kraftaufnahmefläche 15a auftretenden elektrischen Ladungen werden über das Krafteinleitelement 34a, über die Pressfläche 13 und über das Federelement 50a zum Elektronikelement 45 abgeleitet. Das Krafteinleitelement 34a, die Pressfläche 13 und das Federelement 50a sind so ein Ladungsleiter 61a.

Entsprechend stellen die Federkontakte 48b, 50b durch das Andrücken der Federkontaktflächen 49b, 51b eine elektrische Verbindung zwischen dem Elektronikelement 45 und der piezoelektrischen Messelementanordnung 20b her. In vorteilhafter Ausführungsform werden bei einer Krafteinwirkung auf das piezoelektrische Messelement 36b die auf einer zweiten Kraftaufnahmefläche 16b auftretenden elektrischen Ladungen über das Krafteinleitelement 35b, über den elektrisch leitenden Bereich 38b der Elektrodenfolie und über das Federelement 48b zum Elektronikelement 45 abgeleitet. Das Krafteinleitelement 35b, der elektrisch leitende Bereich 38b der Elektrodenfolie und das Federelement 48b sind so ein Ladungsleiter 61b. Die bei einer Krafteinwirkung auf das piezoelektrische Messelement 36b auf einer ersten Kraftaufnahmefläche 15b auftretenden elektrischen Ladungen werden über das Krafteinleitelement 34b, über die Pressfläche 13 und über das Federelement 50b zum Elektronikelement 45 abgeleitet. Das Krafteinleitelement 34b, die Pressfläche 13 und das Federelement 50b sind so ein Ladungsleiter 61b.

In vorteilhafter Ausführungsform aus Fig. 7 sind die elektrisch leitenden Bereiche 38a und 38b der Elektrodenfolie 39 durch einen nicht elektrisch leitend beschichteten Bereich der Isolierfolie 37 voneinander elektrisch isoliert. Dies ermöglicht eine selektiven Kontaktierung eines piezoelektrischen Messelements 36a, 36b und damit eine separate Auswertung der Ladungssignale der piezoelektrischen Messelemente 36a, 36b bei Krafteinwirkung auf das jeweilige piezoelektrische Messelement 36a, 36b.

In einer weiteren Ausführungsform werden mindestens zwei piezoelektrische Messelemente 36 mittels eines Bereichs einer elektrisch leitenden Schicht einer Elektrodenfolie parallel kontaktiert. Im Folgenden wird unter einer piezoelektrischen Messelementgruppe mindestens zwei parallel kontaktierte piezoelektrische Messelementanordnungen 20 verstanden.

In einer weiteren, nicht gezeigten Ausführungsform ist zwischen dem Krafteinleitelement 34a, 34b und der Pressfläche 13 eine weitere Elektrodenfolie angeordnet; wobei die Elektrodenfolie die Pressfläche 13 gegen das Krafteinleitelement 34 elektrisch isoliert; wobei eine elektrisch leitenden Schicht auf der dem Krafteinleitelement 34a, 34b zugewandten Seite der Isolierfolie in bekannter Weise aufgebracht ist; wobei die bei einer Krafteinwirkung auf das piezoelektrische Messelement 36a, 36b auf einer ersten Kraftaufnahmefläche 15a, 15b auftretenden elektrischen Ladungen über das Krafteinleitelement 34a, 34b, über die elektrisch leitende Schicht der weiteren Elektrodenfolie und über das Federelement 50a, 50b zum Elektronikelement 45 abgeleitet werden.

Die weitere Elektrodenfolie weist auf mindestens einer Seite eine durchgehende elektrisch leitende Schicht oder eine strukturierte elektrisch leitende Schicht auf, gleich der Elektrodenfolie 39.

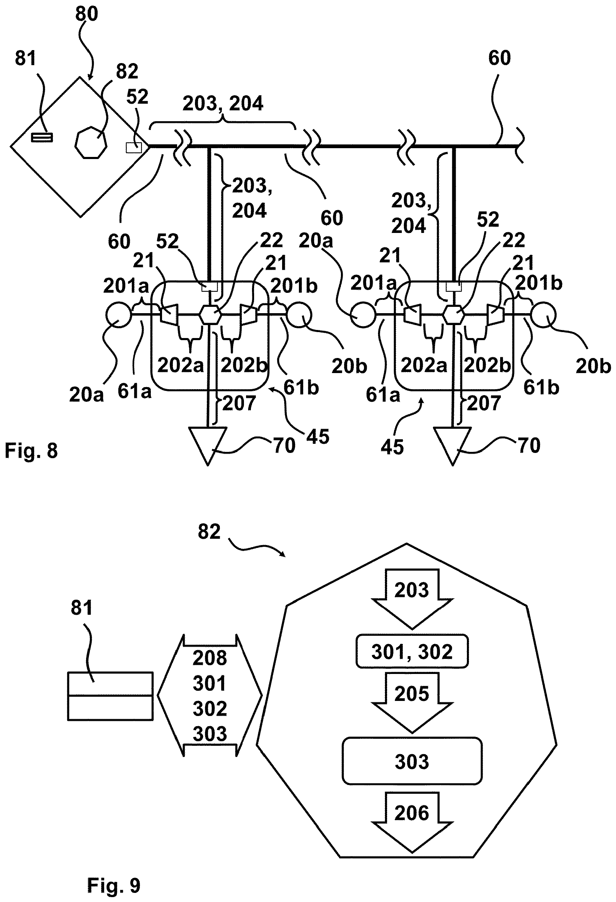

In bevorzugter Ausführungsform weist das Trägerelement 30, 30a, 30c, 30c je ein Elektronikelement 45 zwischen zwei piezoelektrischen Messelementanordnungen 20a, 20b auf, wie in Fig. 3, Fig. 4 und Fig. 5 gezeigt. Auf dem Elektronikelement 45 ist, wie in Fig.8 gezeigt, in vorteilhafter Ausführungsform mindestens ein Ladungsverstärker 21 angeordnet, der das Ladungssignal 201a, 201b einer piezoelektrischen Messelementanordnung 20a, 20b oder piezoelektrischen Messelementgruppe in eine zum Ladungssignal 201a, 201b proportionale elektrische Spannung oder einen zum Ladungssignal 201a, 201b proportionalen Strom wandelt. Die dem Ladungssignal 201a, 201b proportionale elektrische Spannung oder der zum Ladungssignal 201a, 201b proportionalen Strom wird im Folgenden als Ladungsverstärkersignal 202a, 202b bezeichnet. Des Weiteren ist auf dem Elektronikelement 45 in vorteilhafter Ausführungsform mindestens ein A/D-Wandler 22 angeordnet, welcher das Ladungsverstärkersignal 202a, 202b in ein digitales Ladungssignal 203 wandelt und bereitstellt.

Bereitstellen eines Signals ist im Folgenden so zu verstehen, dass das bereitgestellte Signal für eine weitere Verwendung verfügbar ist. Bereitstellen beinhaltet so auch das Speichern des Signals auf einem elektronischen Spei-cher und das Laden des Signals aus diesem Speicher. Bereit-stellen beinhaltet auch das Darstellen des Signals auf einer Anzeige.

Ein A/D-Wandler 22 ist selbstverständlich nicht ausschliesslich ein elektronisches Bauteil mit genau einem Signaleingang und genau einem Signalausgang. Der Fachmann kennt ein elektronisches Bauteil, in welchem mehrere Signaleingänge und mehrere Signalausgänge angeordnet sind, welche mehrere Eingangssignale zu mehreren digitalen Ausgangssignalen wandeln. Ein A/D-Wandler 22 ist dementsprechend auch als Paar bestehend aus einem Signaleingang und einem Signalausgang eines elektronischen Bauteils, in welchem mehrere Signaleingänge und mehrere Signalausgänge angeordnet sind, zu verstehen.

Selbstverständlich können auch elektronische Bauteile mit unterschiedlichen Funktionen, wie A/D-Wandler 22 und Ladungsverstärker 21, in einem elektronischen Bauteil zusammengefasst sein, beispielsweise in Form einer anwendungsspezifischen integrierten Schaltung, kurz ASIC. Im Folgenden wird der Einfachheit halber weiter ein A/D-Wandler und ein Ladungsverstärker genannt, auch wenn sie in Form einer ASIC vorliegen sollten.

Das Elektronikelement 45 weist mindestens ein Anschlusselement 52 für elektrische Signalleiter 60 auf, wie in Fig. 3 bis 5 gezeigt ist. In Fig. 8 sind die elektrischen Signalleiter 60 schematisch dargestellt. Das Anschlusselement 52 ermöglicht eine elektrische Verbindung von mindestens zwei Elektronikelementen 45 über elektrische Signalleiter 60. Elektrische Signalleiter 60 verbinden mittels des Anschlusselements 52 Elektronikelemente 45 eines Trägerelements 30, 30a, 30b 30c oder unterschiedlicher Trägerelemente 30, 30a, 30, 30c.

Der WIM Sensor 10 weist in vorteilhafter Ausführungsform ein Auswerteelement 80 auf. Das Auswerteelement 80 ist in einem Raum 12 des Hohlprofils 11 angeordnet. Digitale Ladungssignale 203 piezoelektrischer Messelementanordnungen 20, 20a, 20b oder piezoelektrischen Messelementgruppen sind im Auswerteelement 80 verfügbar für eine Auswertung.

Auf dem Auswerteelement 80 sind vorteilhafterweise mindestens ein Mikroprozessor 82, sowie mindestens ein nichtflüchtiges Speicherelement 81, sowie mindestens ein Anschlusselement 52 für einen elektrischen Signalleiter 60 angeordnet. Des Weiteren verbindet ein elektrischer Signalleiter 60 mindestens ein Anschlusselement 52 eines Elektronikelements 45 mit einem Auswerteelement 80.

Vorteilhafterweise werden durch die Nutzung digitaler Signale weniger elektrische Leiter in einem elektrischen Signalleiter 60 benötigt, als Signale verfügbar sind.

Digitale Ladungssignale 203 der Elektronikelemente 45 eines WIM Sensors 10 sind mittels der Anschlusselemente 52 und der elektrischen Signalleiter 60 in einem Auswerteelement 80 zur Auswertung verfügbar.

In einer weiteren Ausführungsform dient das Anschlusselement 52 der Stromversorgung eines Elektronikelements 45.

In einer weiteren Ausführungsform ist mindestens ein Messfühler 70 in einem Raum 12 des Hohlprofils 11 angeordnet, welcher Messfühler 70 eine physikalische Grösse misst und als Messfühlersignal 207 ausgibt. Ein A/D-Wandler 22 wandelt das Messfühlersignal 207 zu einem digitalen Messfühlersignal 204 und stellt das digitale Messfühlersignal 204 an einer Anschlusseinheit 52 bereit. Der Messfühler 70 misst eine der folgenden physikalischen Grössen: Temperatur, Schallwellen, Beschleunigung.

In einer weiteren Ausführungsform ist zusätzlich mindestens ein digitales Messfühlersignal 204 mittels der Anschlusseinheit 52 und eines elektrischen Signalleiters 60 in einem Auswerteelement 80 zur Auswertung verfügbar.

In vorteilhafter Ausführungsform wird mindestens ein digitales Ladungssignal 203 im Auswerteelement 80 durch eine Kalibrierfunktion 301 kalibriert. Die Kalibierfunktion 301 ist eine mathematische Funktion mit mindestens einer Variablen.

In bevorzugter Ausführungsform ist die Kalibrierfunktion 301 auf dem nicht-flüchtigem Speicherelement 81 gespeichert und wird in den Mikroprozessor 82 geladen.

In der Kalibrierfunktion 301 sind mehrere Parameter 302 genutzt, welche Parameter 302 charakteristischen Eigenschaften eines piezoelektrischen Messelements 36, 36a, 36b entsprechen. Diese charakteristischen Eigenschaften sind mindestens Folgende: Eine Sensitivität und eine Linearität eines piezoelektrischen Messelements 36, 36a, 36b. Ein Parameter 302 hat dabei einen Zahlenwert oder mehrere Zahlenwerte, und ist eindeutig einem piezoelektrischen Messelement 36, 36a, 36b zuzuordnen. Die Linearität und Sensitivität wurden vorgängig für das piezoelektrische Messelement 36, 36a, 36b bestimmt.

Bevorzugt ist die Kalibierfunktion ein Polynom endlichen Grades. Ein Polynom summiert die Vielfachen von Potenzen einer Variablen. Das Vielfache ist je Potenz der Variable durch einen Koeffizienten gegeben, welcher mit der Potenz der Variable multipliziert wird. Die Koeffizienten stellen Parameter 302 dar.

Die Kalibrierfunktion 301 erzeugt mit dem digitalen Ladungssignal 203 eines piezoelektrischen Messelements 36, 36a, 36b als Variable ein kalibriertes digitales Ladungssignal 205, wie in Fig. 9 schematisch dargestellt. Das kalibrierte digitale Ladungssignal 205 steht durch die Wahl der Kalibrierfunktion 301 in einem linearen Zusammenhang zu der auf das piezoelektrische Messelement 36, 36a, 36b wirkenden Radlast. Dies dient der Erhöhung der Messgenauigkeit bei der Ermittlung einer von einem Rad eines überfahrenden Fahrzeuges auf ein piezoelektrisches Messelement 36, 36a, 36b eines WIM Sensors 10 wirkenden Radlast.

Die Kalibrierfunktion 301 und die Parameter 302 werden bevorzugt durch ein Verfahren bestimmt, in welchem auf das piezoelektrische Messelement 36, 36a, 36b in einer Folge unterschiedlich grosse und definierte Kräfte ausgeübt werden und das digitale Ladungssignal 203 aufgezeichnet wird. In dem Verfahren bestimmt zunächst ein Algorithmus mittels der aus der numerischen Mathematik bekannten Polynominterpolation das Interpolationspolynom, welches mit dem digitalen Ladungssignal 203 als Variable die im Verfahren angewandten Kräfte ergibt. Dieses Interpolationspolynom ist die Kalibrierfunktion 301, welche aus dem digitalen Ladungssignal 203 als Variable das kalibrierte digitale Ladungssignal 205 erzeugt. Die Sensitivität ist direkt gegeben durch den Koeffizienten des linearen Glieds des Polynoms. Die Linearität ist gegeben durch die weiteren Koeffizienten des Polynoms.

Der Fachmann kann eine andere mathematische Form der Kalibrierfunktion 301 wählen und eine anders Verfahren zur Bestimmung der Kalibrierfunktion wählen.

In bevorzugter Ausführungsform wird die Kalibrierfunktion 301 mit einem Zeitstempel 208 versehen auf dem nicht flüchtigen Speicherelement 81 gespeichert, wobei ein Zeitstempel 208 aus einem Datum und einer Uhrzeit besteht und durch einen Algorithmus im Mikroprozessor 82 bereitgestellt wird

Die gespeicherte Kalibrierfunktion 301 wird im Rahmen einer erneuten Bestimmung der Kalibrierfunktion 301 durch das oben genannte Verfahren angepasst; wobei die vormals auf dem nicht flüchtigen Speicherelement 81 gespeicherte Kalibrierfunktion 301 ersetzt wird. Die vormals vorhandene Kalibrierfunktion 301 ist weiterhin auf dem nicht flüchtigen Speicherelement 81 archiviert.

Auf dem nicht-flüchtigen Speicherelement 81 ist für jedes piezoelektrische Messelement 36, 36a, 36b je eine Kalibrierfunktion 301 gespeichert.

Vorteilhafterweise wird aus einem zeitlichen Verlauf der mit einem Zeitstempel 208 versehenen, archivierten Kalibrierfunktionen 301 die Performance des WIM Sensors 10, Alterungseffekte des piezoelektrischen Messelements 36, 36a, 36b oder Alterungseffekte und Zustand des Fahrbahnbelags 2 des Fahrbahnabschnittes 1 ermittelt.

Die Erhöhung der Messgenauigkeit bei der Ermittlung einer von einem Rad eines überfahrenden Fahrzeuges 2, 2 `, 2", 2'" auf ein piezoelektrisches Messelement 36, 36a, 36b eines WIM Sensors 10 wirkenden Radlast kann auch auf eine andere Weise mit einer weiteren Ausführungsform der Kalibrierfunktion 301 erreicht werden. Im Unterschied zur oben beschriebenen Ausführungsform der Kalibrierfunktion 301, erzeugt die Kalibrierfunktion 301 in der folgenden Ausführungsform mit dem digitalen Messfühlersignal 204 eines Messfühlers 70, welcher die Temperatur des piezoelektrischen Messelements 36, 36a, 36b ermittelt, als Variable und mit dem digitalen Ladungssignal 203 eines piezoelektrischen Messelements 36, 36a, 36b ein kalibriertes digitales Ladungssignal 205. Es ist dementsprechend ein Messfühler 70 für diese Ausführungsform der Kalibrierfunktion 301 benötigt. Die Parameter 302 der Kalibrierfunktion 301 sind mindestens die Sensitivität und die Linearität und eine Temperaturabhängigkeit des piezoelektrischen Messelements 36, 36a, 36b, welche Linearität und Sensitivität und Temperaturabhängigkeit vorgängig für das piezoelektrische Messelement 36, 36a, 36b bestimmt sind. Die Kalibrierfunktion 301 erzeugt aus dem digitalen Messfühlersignal 204und dem digitalen Ladungssignal 203 das kalibrierte digitale Ladungssignal 205, wodurch idealerweise das kalibrierte digitale Ladungssignal 205 in einem linearen Zusammenhang zu der auf das piezoelektrische Messelement 36, 36a, 36b wirkenden Radlast steht und unabhängig von der Temperatur des piezoelektrischen Messelements 36, 36a, 36b ist.

In bevorzugter Ausführungsform wird im Mikroprozessor 82 des Auswerteelements des WIM Sensors 10 je eine Kalibrierfunktion 301 einem piezoelektrischen Messelement 36, 36a, 36b zugeordnet. Mit der Kalibrierfunktion 301 wird das kalibrierte digitale Ladungssignal 205 des piezoelektrischen Messelements 36, 36a, 36b aus dem digitalen Ladungssignal 203 des piezoelektrischen Messelements 36, 36a, 36b erzeugt.

In vorteilhafter Ausführungsform ist im nicht flüchtigen Speicherelement 81 eine Gesamtkraftfunktion 303 gespeichert. Die Gesamtkraftfunktion 303 ist ein mathematischer Algorithmus und wird in den Mikroprozessor 82 geladen und auf alle kalibrierten digitalen Ladungssignale 205 angewendet. Der Mikroprozessor 82 berechnet auf Grund der Gesamtkraftfunktion 303 die von einem Rad eines Fahrzeuges 2a, 2b, 2c, 2d bei einer Überfahrt über den WIM Sensor 10 auf den Fahrbahnabschnitt 1 ausgeübte Gesamtkraft 206.

### Bezugszeichenliste

- 1: Fahrbahnabschnitt
- 2a, 2b, 2c, 2d: Fahrzeug, Fahrzeug mit Anhänger, Fahrzeugkomposition
- 10: WIM Sensor
- 11: Hohlprofil
- 12: Raum
- 13: Pressfläche
- 14: Pressfläche
- 15: Kraftaufnahmefläche
- 16: Kraftaufnahmefläche
- 20, 20a, 20b: Piezoelektrische Messelementanordnung
- 21: Ladungsverstärker
- 22: A/D-Wandler
- 30: Trägerelement
- 30a: Trägerelement
- 30b: Trägerelement
- 30c: Trägerelement
- 31: Führungselement
- 32: Teilverbindungselement, Zapfen
- 33: Teilverbindungselement, Schlitz
- 34, 34a, 34b: Krafteinleitelement
- 35, 35a, 35b: Krafteinleitelement
- 36, 36a, 36b: Piezoelektrisches Messelement
- 37: Isolierfolie
- 38: Elektrisch leitende Schicht
- 38a, 38b: Elektrisch leitender Bereich
- 39: Elektrodenfolie
- 41: Aussparung
- 42: Halteklammer
- 43: Halteklammer
- 44: Halteelemente
- 45: Elektronikelement
- 46: Verbindungselement, Schlitz
- 47: Verbindungselement, Zapfen
- 48a, 48b: Federkontakt
- 49a, 49b: Federkontaktfläche
- 50a, 50b: Federkontakt
- 51a, 51b: Federkontaktfläche
- 52: Anschlusselement
- 60: elektrischer Signalleiter
- 61a, 61b: elektrischer Ladungsleiter
- 70: Messfühler
- 80: Auswerteelement
- 81: nicht flüchtiges Speicherelement
- 82: Mikroprozessor
- 90: Träger
- 91: Trägerelementteil
- 201a, 201b: Ladungssignal
- 202a, 202b: Ladungsverstärkersignal
- 203: digitales Ladungssignal
- 204: digitales Messfühlersignal
- 205: kalibriertes digitales Ladungssignal
- 206: Gesamtkraft
- 207: Messfühlersignal
- 208: Zeitstempel
- 301: Kalibrierfunktion
- 302: Parameter
- 303: Gesamtkraftfunktion

## Patentansprüche

1. WIM Sensor (10) zur Ermittlung von Radlasten eines Fahrzeugs (2a, 2b, 2c, 2d) auf einem Fahrbahnabschnitt (1) bei der Überfahrt eines Rades des Fahrzeuges (2a, 2b, 2c, 2d); welcher WIM Sensor (10) im Fahrbahnabschnitt (1) in der Fahrbahnoberfläche abschliessend mit der Fahrbahnoberfläche des Fahrbahnabschnitts (1) angeordnet ist; welcher WIM Sensor (10) als ein entlang einer Längsachse (X-X') mit länglicher Ausdehnung ausgestaltetes Hohlprofil (11) ausgeführt ist; welches Hohlprofil (11) mindesten einen ersten Raum (12) umschliesst; in welchem ersten Raum (12) mehrere piezoelektrische Messelemente (36, 36a, 36b) entlang der Längsachse (X-X`)angeordnet sind; welche piezoelektrischen Messelemente (36, 36a, 36b) jeweils eine erste Kraftaufnahmefläche (15, 15a, 15b) und eine zweite Kraftaufnahmefläche (16, 16a, 16b) aufweisen; auf welche piezoelektrischen Messelemente (36, 36a, 36b) Radlasten bei Überfahrt des Rades des Fahrzeuges (2a, 2b, 2c, 2d) wirken; wobei jedes piezoelektrische Messelement (36, 36a, 36b) zur wirkenden Radlast proportionale elektrische Ladungen auf der ersten Kraftaufnahmefläche (15, 15a, 15b) und auf der zweiten Kraftaufnahmefläche (16, 16a, 16b) generiert; **dadurch gekennzeichnet, dass** im ersten Raum (12) mindestens ein Trägerelement (30, 30a, 30b, 30c) angeordnet ist; dass das Trägerelement (30, 30a, 30b, 30c) mindestens ein piezoelektrisches Messelement (36, 36a, 36b) fixiert; dass im ersten Raum (12) mindestens ein Elektronikelement (45) angeordnet ist; dass das Trägerelement (30, 30a, 30b, 30c) mindestens ein Elektronikelement (45) fixiert; dass im ersten Raum (12) mindestens ein elektrischer Ladungsleiter (61a, 61b) angeordnet ist; dass der elektrische Ladungsleiter (61a, 61b) mindestens eine Kraftaufnahmefläche (15, 15a, 15b) und das Elektronikelement (45) elektrisch verbindet; und dass der elektrische Ladungsleiter (61a, 61b) ein Ladungssignal (201a, 201b) von mindestens einer Kraftaufnahmefläche (15, 15a, 15b,16, 16a, 16b) zum Elektronikelement (45) leitet.

2. WIM Sensor (10) nach Anspruch 1, **dadurch gekennzeichnet, dass** im ersten Raum (12) eine erste Pressfläche (13) und eine zweite Pressfläche (14) angeordnet ist, welche Pressflächen (13, 14) gegenüberliegend angeordnet sind; dass die erste Kraftaufnahmefläche (15, 15a, 15b) und die zweite Kraftaufnahmefläche (16, 16a, 16b) jeweils einer Pressfläche (13, 14) zugewandt ist, welche Pressflächen (13, 14) direkt oder indirekt auf die Kraftaufnahmeflächen (15, 15a, 15b, 16, 16a, 16b) wirken; welche indirekte Wirkung der Pressflächen (13, 14) auf die Kraftaufnahmeflächen (15, 15a, 15b, 16, 16a, 16b) mittels mindestens eines ersten Krafteinleitelements (34, 34a, 34b) und eines zweiten Krafteinleitelements (35, 35a, 35b) geschieht, welche Krafteinleitelemente (34, 34a, 34b, 35, 35a, 35b) zwischen einer Pressfläche (13,14) und einer Kraftaufnahmefläche (15, 15a, 15b, 16, 16a, 16b) angeordnet sind; dass zwischen der zweiten Kraftaufnahmefläche (16, 16a, 16b) und der zweiten Pressfläche (14) eine Elektrodenfolie (39) angeordnet ist; dass die Elektrodenfolie (39) eine Isolierfolie (37) aufweist; dass die Isolierfolie (37) aus einem elektrisch isolierenden Material besteht; dass die Isolierfolie (37) die zweite Kraftaufnahmefläche (16, 16a, 16b) gegen die zweite Pressfläche (14) elektrisch isoliert; dass die Elektrodenfolie (39) auf mindestens der der zweiten Kraftaufnahmefläche (16, 16a, 16b) zugewandten Seite der Isolierfolie (37) eine elektrisch leitende Schicht (38) aufweist; dass die elektrisch leitende Schicht (38) auf der der zweiten Kraftaufnahmefläche (16, 16a, 16b) zugewandten Seite der Isolierfolie (37) in mindestens zwei elektrisch leitende Bereiche (38a, 38b) unterteilt ist; und dass die Elektrodenfolie (39) zwischen den elektrisch leitenden Bereichen (38a, 38b) der elektrisch leitenden Schicht (38) eine elektrische Isolierung aufweist.

3. WIM Sensor (10) nach Anspruch 2, **dadurch gekennzeichnet, dass** mindestens ein elektrisch leitender Bereich (38a, 38b) der Elektrodenfolie (39) kraftschlüssig mit dem zweiten Krafteinleitelement (35, 35a, 35b) verbunden ist; dass die kraftschlüssige Verbindung vom zweiten Krafteinleitelement (35, 35a, 35b) und dem elektrisch leitenden Bereich (38a, 38b) der Elektrodenfolie (37) einen elektrischen Kontakt zwischen dem zweiten Krafteinleitelement (35, 35a, 35b) und dem elektrisch leitenden Bereich (38a, 38b) der Elektrodenfolie (39) bildet; dass mittels des zweiten Krafteinleitelements (35, 35a, 35b) ein elektrischer Kontakt zwischen der zweiten Kraftaufnahmefläche (16, 16a, 16b) und dem elektrisch leitenden Bereich (38a, 38b) besteht; und dass auf Grund der elektrischen Isolierung zwischen elektrisch leitenden Bereichen (38a, 38b) zweite Kraftaufnahmeflächen (16, 16a, 16b) verschiedener piezoelektrischer Messelemente (36, 36a, 36b) voneinander elektrisch isoliert sind.

4. WIM Sensor (10) nach Anspruch 3, **dadurch gekennzeichnet, dass** ein am Trägerelement (30, 30a, 30b, 30c) fixiertes Elektronikelement (45) mindestens einen Federkontakt (48a, 48b, 50a, 50b) aufweist; dass der Federkontakt (48a, 48b, 50a, 50b) elastisch ausgeführt ist; dass der Federkontakt (48a, 48b, 50a, 50b) elektrisch leitend ausgeführt ist; dass der Federkontakt (48a, 48b, 50a, 50b) mit dem Elektronikelement elektrisch leitend verbunden ist; dass der Federkontakt (48a, 48b, 50a, 50b) eine Federkontaktfläche (49a, 49b, 51a, 51b) aufweist; dass der Federkontakt (48a, 48b, 50a, 50b) im montierten Zustand im Hohlprofil (11) zwischen dem Elektronikelement (45) und einer Kontaktfläche vorgespannt ist; dass der vorgespannte Federkontakt (48a, 48b, 50a, 50b) mittels Federkontaktfläche (49a, 49b, 51a, 51b) eine definierte mechanische Federkraft auf die Kontaktfläche ausübt; dass die Federkontaktfläche (49a, 49b, 51a, 51b) mit der Kontaktfläche kraftschlüssig verbunden ist; dass das Elektronikelement (45) mit der Kontaktfläche mittels dem Federkontakt (48a, 48b, 50a, 50b) und der kraftschlüssigen Verbindung zwischen der Kontaktfläche und der Federkontaktfläche (49a, 49b, 51a, 51b) elektrisch leitend verbunden ist; und dass die Kontaktfläche eine Elektrodenfolie (37) oder eine Pressfläche (13,14) des Hohlprofils (11) ist.

5. WIM Sensor 10 nach Anspruch 4, **dadurch gekennzeichnet, dass** ein erster elektrischer Ladungsleiter (61a, 61b), welcher die erste Kraftaufnahmefläche (15, 15a, 15b) des piezoelektrischen Messelements (36, 36, 36b) und das Elektronikelement (45) elektrisch verbindet, gegeben ist durch den ersten Federkontakt (50a, 50b), dem elektrischen Kontakt zwischen dem ersten Federkontakt(50a, 50b) und der ersten Pressfläche (13) des Hohlprofils (11), dem Hohlprofil (11), dem elektrischen Kontakt zwischen dem Hohlprofil (11) und dem ersten Krafteinleitelement (34, 34a, 34b), und dem ersten Krafteinleitelement (34, 34a, 34b); dass der erste elektrische Ladungsleiter (61a, 61b) ein erstes Ladungssignal (201a) leitet; dass ein zweiter elektrischer Ladungsleiter (61a, 61b), welcher die zweite Kraftaufnahmefläche (16, 16a, 16b) des piezoelektrischen Messelements (36, 36, 36b) und das Elektronikelement (45) elektrisch verbindet, gegeben ist durch den zweiten Federkontakt (48a, 48b), dem elektrischen Kontakt zwischen dem zweiten Federkontakt (48a, 48b) und der Elektrodenfolie (39), der Elektrodenfolie (39), dem elektrischen Kontakt zwischen der Elektrodenfolie (39) und dem zweiten Krafteinleitelement (35, 35a, 35b) und dem zweiten Krafteinleitelement; und dass der zweite elektrische Ladungsleiter (61a, 61b) ein zweites Ladungssignal (201b) leitet.

6. WIM Sensor (10) nach Anspruch 5, **dadurch gekennzeichnet, dass** am am Trägerelement (30, 30a, 30b, 30c) fixierten Elektronikelement (45) mindestens ein Ladungsverstärker (21) und mindestens ein A/D-Wandler (22) angeordnet ist; dass der Ladungsverstärker (21) das Ladungssignal (201a, 201b) eines piezoelektrischen Messelements (36, 36a, 36b) in ein Ladungsverstärkersignal (202a, 202b) wandelt; dass der A/D-Wandler (22) das Ladungsverstärkersignal (202a, 202b) in ein digitales Ladungssignal (203) wandelt; und dass der A/D-Wandler (22) als Ausgangssignal das digitale Ladungssignal (203) bereitstellt.

7. WIM Sensor (10) nach Anspruch 6, **dadurch gekennzeichnet, dass** die von einer elektrischen Ladung zwischen der ersten Kraftaufnahmefläche (15, 15a, 15b) oder der zweiten Kraftaufnahmefläche (16, 16a, 16b) des piezoelektrischen Messelements (20, 20a, 20b) und dem Ladungsverstärker (21) des Elektronikelements (45) zurückgelegte Wegstrecke maximal 20 mm beträgt; und dass die Wegstrecke kürzer oder gleich 20 mm das Auftreten von Störsignale und Rauschen im Ladungssignal (201) minimiert.

8. WIM Sensor (10) nach einem der Ansprüche 1 bis 7, **dadurch gekennzeichnet, dass** ein Trägerelement (30c) mehrere Trägerelementteile (91) aufweist; und dass die Trägerelementteile (91) formschlüssig, kraftschlüssig oder stoffschlüssig zu einem Trägerelement (30c) verbunden sind.

9. WIM Sensor (10) nach einem der Ansprüche 6 bis 8, **dadurch gekennzeichnet, dass** in einem Raum (12) des WIM Sensors (10) mindestens ein Auswerteelement (80) angeordnet ist; dass auf dem Auswerteelement (80) ein Anschlusselement (52) für einen elektrischen Signalleiter (60) angeordnet ist; dass auf dem Elektronikelement (45) ein Anschlusselement (52) für den elektrischen Signalleiter (60) angeordnet ist; dass im Raum (12) mindestens ein elektrischer Signalleiter (60) angeordnet ist; dass der elektrische Signalleiter (60) das Anschlusselement (52) des Auswerteelements (80) und die Anschlusselemente (52) von mindestens zwei Elektronikelementen (45) elektrisch in einer Reihenschaltung verbindet; und dass die Elektronikelemente (45) die bereitgestellten digitalen Ladungssignale (203) über den elektrischen Signalleiter (60) an das Auswerteelement (80) übertragen.

10. WIM Sensor (10) nach Anspruch 9, **dadurch gekennzeichnet, dass** in einem Raum (12) des WIM Sensors (10) mindestens ein Messfühler (70) angeordnet ist; dass der Messfühler (70) eine physikalische Grösse als Messfühlersignal (207) misst; dass der A/D-Wandler (22) das Messfühlersignal (207) in ein digitales Messfühlersignal (204) wandelt und am Anschlusselement (52) bereitstellt; und dass das bereitgestellte digitale Messfühlersignal (204) über den elektrischen Signalleiter (60) im Auswerteelement (80) verfügbar ist.

11. Verfahren zur Kalibration eines WIM Sensors (10) nach einem der Ansprüche 6 bis 9, **dadurch gekennzeichnet, dass** eine Kalibierfunktion (301) verwendet wird, welche eine mathematische Funktion ist, welche ein Polynom endlichen Grades ist, welches Polynom Koeffizienten beinhaltet, welche Koeffizienten Parameter (302) darstellen, welche Parameter (302) eindeutig einem piezoelektrischen Messelement (36, 36a, 36b) zuzuordnen sind; dass als Parameter (302) ein Zahlenwert oder mehrere Zahlenwerte verwendet werden, welche Parameter (302) mindestens eine vorgängig ermittelte Sensitivität und eine vorgängig ermittelte Linearität des zugeordneten piezoelektrischen Messelements (36, 36a, 36b) sind; dass die Kalibrierfunktion (301) mit dem digitalen Ladungssignal (203) eines piezoelektrischen Messelements (36, 36a, 36b) als Variable ein kalibriertes digitales Ladungssignal (205) erzeugt; dass die Kalibrierfunktion (301) einen linearen Zusammenhang zwischen der auf das piezoelektrische Messelement (36, 36a, 36b) wirkenden Radlast und der Höhe des kalibrierten digitalen Ladungssignals (205) erzeugt, wodurch eine Messgenauigkeit bei der Ermittlung der Radlast erhöht wird.

12. Verfahren zur Kalibration eines WIM Sensors (10) nach Anspruch 10, **dadurch gekennzeichnet, dass** eine Kalibierfunktion (301) verwendet wird, welche eine mathematische Funktion ist, welche ein Polynom endlichen Grades ist, welches Polynom Koeffizienten beinhaltet, welche Koeffizienten Parameter (302) darstellen, welche Parameter (302) eindeutig einem piezoelektrischen Messelement (36, 36a, 36b) zuzuordnen sind; dass als Parameter (302) ein Zahlenwert oder mehrere Zahlenwerte verwendet werden, welche Parameter (302) mindestens eine vorgängig ermittelte Sensitivität und eine vorgängig ermittelte Linearität und eine vorgängig ermittelte Temperaturabhängigkeit des zugeordneten piezoelektrischen Messelements (36, 36a, 36b) sind; dass die Kalibrierfunktion (301) mit dem digitale Ladungssignal (203) eines piezoelektrischen Messelements (36, 36a, 36b) als Variable und dem digitalen Messfühlersignal (204) als Variable ein kalibriertes digitales Ladungssignal (205) erzeugt, wobei der Messfühler (70) des digitalen Messfühlersignals (204) ein Temperaturfühler ist welcher eine Temperatur des piezoelektrischen Messelements (36, 36a, 36b) ermittelt; und dass die Kalibrierfunktion (301) einen linearen Zusammenhang zwischen der auf das piezoelektrische Messelement (36, 36a, 36b) wirkenden Kraft und der Höhe des kalibrierten digitalen Ladungssignals (205) erzeugt, wodurch die Abhängigkeit des kalibrierten digitalen Ladungssignals (205) von der Temperatur des piezoelektrischen Messelements (36, 36a, 36b) minimiert wird und eine Messgenauigkeit bei der Ermittlung der Radlast erhöht wird.

13. Verfahren nach einem der Ansprüche 11 bis 12, **dadurch gekennzeichnet, dass** ein Algorithmus die Kalibrierfunktion ermittelt, dass auf das piezoelektrische Messelement (36, 36a, 36b) in einer Folge unterschiedlich grosse und definierte Kräfte ausgeübt werden und der Algorithmus das digitale Ladungssignal (203) zusammen mit der definierten Kraft aufzeichnet; dass der Algorithmus mittels der aus der numerischen Mathematik bekannten Polynominterpolation das Interpolationspolynom bestimmt, welches mit dem digitalen Ladungssignal (203) als Variable für die Kräfte ergibt; dass dieses Interpolationspolynom die Kalibrierfunktion (301) ist, welche aus dem digitalen Ladungssignal (203) als Variable das kalibrierte digitale Ladungssignal (205) erzeugt; dass der Algorithmus die ermittelte Kalibrierfunktion (301) mit einem Zeitstempel (208) auf einem nicht flüchtigem Speicherelement (81) speichert.

14. Verfahren zur Herstellung eines WIM Sensors (10) nach einem der Ansprüche 1 bis 10 **dadurch gekennzeichnet, dass** mittels mindestens zweier Verbindungselemente (46, 47) zwei Trägerelemente (30, 30a, 30b, 30c) formschlüssig oder kraftschlüssig zu einem Träger (90) verbunden werden, welche Verbindungselemente (46, 47) die Trägerelemente (30, 30a, 30b, 30c) an mindesten einem Ende aufweisen; dass der Träger (90) aus mindesten zwei untereinander verbundenen Trägerelementen (30, 30a, 30b, 30c) besteht; und dass der Träger (90) auf einfache Weise in ein aufgespanntes Hohlprofil (11) eines WIM Sensors (10) eingezogen wird.

15. Verfahren zur Herstellung eines WIM Sensors (10) nach Anspruch 14, **dadurch gekennzeichnet, dass** mindestens eine Elektrodenfolie (39) zusammen mit dem Träger (90) in das aufgespannte Hohlprofil (11) eingezogen wird.

## Claims

1. A WIM sensor (10) for determining wheel loads of a vehicle (2a, 2b, 2c, 2d) on a roadway segment (1) during the passage of a wheel of the vehicle (2a, 2b, 2c, 2d); said WIM sensor (10) being arranged in the roadway segment (1) in the roadway surface flush with the roadway surface of the roadway segment (1); wherein said WIM sensor (10) is designed as an elongated hollow profile (11) extending along a longitudinal axis (X-X`) thereof; which hollow profile (11) encloses at least a first space (12); in which first space (12) are arranged a plurality of piezoelectric measuring elements (36, 36a, 36b) along said longitudinal axis (X-X`); said piezoelectric measuring elements (36, 36a, 36b) each comprising a first force-receiving surface (15, 15a, 15b) and a second force-receiving surface (16, 16a, 16b); wherein during crossing of the wheel of the vehicle (2a, 2b, 2c, 2d) wheel loads act on said piezoelectric measuring elements (36, 36a, 36b); wherein each piezoelectric measuring element (36, 36a, 36b) on the first force-receiving surface (15, 15a, 15b) and on the second force-receiving surface (16, 16a, 16b) thereof generates electric charges that are proportional to the wheel load exerted; **characterized in that** in said first space (12) is arranged at least one support element (30, 30a, 30b, 30c); the support element (30, 30a, 30b, 30c) secures at least one piezoelectric measuring element (36, 36a, 36b); in the first space (12) is arranged at least one electronic element (45); the support element (30, 30a, 30b, 30c) secures at least one electronic element (45); in the first space (12) is arranged at least one electric charge conductor (61a, 61b); the electric charge conductor (61a, 61b) electrically connects at least one force-receiving surface (15, 15a, 15b) and the electronic element (45); and **in that** the electric charge conductor (61a, 61b) conducts a charge signal (201a, 201b) from at least one force-receiving surface (15, 15a, 15b, 16, 16a, 16b) to the electronic element (45).

2. The WIM sensor (10) according to claim 1, **characterized in that** in the first space (12) is arranged a first pressing surface (13) and a second pressing surface (14), which pressing surfaces (13, 14) are arranged opposite to each other; the first force-receiving surface (15, 15a, 15b) and the second force-receiving surface (16, 16a, 16b) respectively face one of said pressing surfaces (13, 14), which pressing surfaces (13, 14) act directly or indirectly onto the force-receiving surfaces (15, 15a 15b, 16, 16a, 16b); wherein said indirect action of the pressing surfaces (13, 14) onto the force-receiving surfaces (15, 15a, 15b, 16, 16a, 16b) occurs by means of at least one first force introduction element (34, 34a, 34b) and a second force introduction element (35, 35a, 35b), which force introduction elements (34, 34a, 34b, 35, 35a, 35b) are arranged between a pressing surface (13, 14) and a force-receiving surface (15, 15a, 15b, 16, 16a, 16b); an electrode film (39) is arranged between the second force-receiving surface (16, 16a, 16b) and the second pressing surface (14); said electrode film (39) comprising an insulating film (37); wherein said insulating film (37) consists of an electrically insulating material; said insulating film (37) electrically insulates the second force-receiving surface (16, 16a, 16b) from the second pressing surface (14); the electrode film (39) comprises an electrically conductive layer (38) on at least the side of the insulating film (37) that faces the second force-receiving surface (16, 16a, 16b); the electrically conductive layer (38) on the side of the insulating film (37) that faces the second force-receiving surface (16, 16a, 16b) is subdivided into at least two electrically conductive regions (38a, 38b); and **in that** the electrode film (39) comprises an electrical insulation between said electrically conductive regions (38a, 38b) of the electrically conductive layer (38) .

3. The WIM sensor (10) according to claim 2, **characterized in that** at least one electrically conductive region (38a, 38b) of the electrode film (39) is connected to the second force introduction element (35, 35a, 35b) by force closure; the force closure of the second force introduction element (35, 35a, 35b) and the electrically conductive region (38a, 38b) of the electrode film (37) generates an electrical contact between the second force introduction element (35, 35a, 35b) and the electrically conductive region (38a, 38b) of the electrode film (39); by means of the second force introduction element (35, 35a, 35b) an electrical contact is formed between the second force-receiving surface (16, 16a, 16b) and the electrically conductive region (38a, 38b); and **in that** due to the electrical insulation between electrically conductive regions (38a, 38b) second force-receiving surfaces (16, 16a, 16b) of different piezoelectric measuring elements (36, 36a, 36b) are electrically insulated from each other.

4. The WIM sensor (10) according to claim 3, **characterized in that** an electronic element (45) secured at the support element (30, 30a, 30b, 30c) comprises at least one spring contact (48a, 48b, 50a, 50b); the spring contact (48a, 48b, 50a, 50b) is made elastic; the spring contact (48a, 48b, 50a, 50b) is made electrically conductive; the spring contact (48a, 48b, 50a, 50b) is connected to the electronic element in an electrically conductive manner; the spring contact (48a, 48b, 50a, 50b) comprises a spring contact surface (49a, 49b, 51a, 51b); in the mounted state the spring contact (48a, 48b, 50a, 50b) is prestressed in the hollow profile (11) between the electronic element (45) and a contact surface; the prestressed spring contact (48a, 48b, 50a, 50b) exerts a defined mechanical spring force onto the contact surface by means of a spring contact surface (49a, 49b, 51a, 51b); the spring contact surface (49a, 49b, 51a, 51b) is connected zo the contact surface by force closure; the electronic element (45) is connected in an electrically conductive manner to the contact surface by means of the spring contact (48a, 48b, 50a, 50b) and the connection by force closure between the contact surface and the spring contact surface (49a, 49b, 51a, 51b); and **in that** the contact surface is an electrode film (37) or a pressing surface (13, 14) of the hollow profile (11).

5. The WIM sensor 10 according to claim 4, **characterized in that** a first electric charge conductor (61a, 61b) electrically connecting the first force-receiving surface (15, 15a, 15b) of the piezoelectric measuring element (36, 36, 36b) and the electronic element (45) is formed by the first spring contact (50a, 50b), the electrical contact between the first spring contact (50a, 50b) and the first pressing surface (13) of the hollow profile (11), the hollow profile (11), the electrical contact between the hollow profile (11) and the first force introduction element (34, 34a, 34b), and the first force introduction element (34, 34a, 34b); the first electric charge conductor (61a, 61b) conducts a first charge signal (201a); a second electric charge conductor (61a, 61b) electrically connecting the second force-receiving surface (16, 16a, 16b) of the piezoelectric measuring element (36, 36, 36b) and the electronic element (45) is formed by the second spring contact (48a, 48b), the electrical contact between the second spring contact (48a, 48b) and the electrode film (39), the electrode film (39), the electrical contact between the electrode film (39) and the second force introduction element (35, 35a, 35b), and the second force introduction element; and **in that** the second electric charge conductor (61a, 61b) conducts a second charge signal (201b).

6. The WIM sensor (10) according to claim 5, **characterized in that** on the electronic element (45) secured to the support element (30, 30a, 30b, 30c) is arranged at least one charge amplifier (21) and at least one A/D converter (22); the charge amplifier (21) converts the charge signal (201a, 201b) of a piezoelectric measuring element (36, 36a, 36b) into a charge amplifier signal (202a, 202b); the A/D converter (22) converts the charge amplifier signal (202a, 202b) into a digital charge signal (203); and **in that** the A/D converter (22) provides the digital charge signal (203) as the output signal.

7. The WIM sensor (10) according to claim 6, **characterized in that** the distance traveled by an electric charge between the first force-receiving surface (15, 15a, 15b) or the second force-receiving surface (16, 16a, 16b) of the piezoelectric measuring element (20, 20a, 20b) and the charge amplifier (21) of the electronic element (45) is not more than 20 mm; and **in that** said distance not more than 20 mm minimizes the occurrence of interference signals and noise in the charge signal (201).

8. The WIM sensor (10) according to any of claims 1 to 7, **characterized in that** a support element (30c) comprises a plurality of support element parts (91); and **in that** the support element parts (91) are connected to a support element (30c) by force closure or by material bonding.

9. The WIM sensor (10) according to any of claims 6 to 8, **characterized in that** at least one evaluation element (80) is arranged in a space (12) of the WIM sensor (10); a connection element (52) for an electrical signal conductor (60) is arranged on the evaluation element (80); a connection element (52) for the electrical signal conductor (60) is arranged on the electronic element (45); the electrical signal conductor (60) electrically connects the connection element (52) of the evaluation element (80) and the connection elements (52) of at least two electronic elements (45) in series; and **in that** the electronic elements (45) transmit the digital charge signals (203) provided via the electrical signal conductor (60) to the evaluation element (80).

10. The WIM sensor (10) according to claim 9, **characterized in that** at least one sensor (70) is arranged in a space (12) of the WIM sensor (10); the sensor (70) measures a physical parameter as the sensor signal (207); the A/D converter (22) converts the sensor signal (207) into a digital sensor signal (204) and provides it at the terminal (52); and **in that** the digital sensor signal (204) provided is available in the evaluation element (80) via the electrical signal conductor (60).

11. A method of calibrating a WIM sensor (10) according to any of claims 6 to 9, **characterized in that** a calibration function (301) is used which is a mathematical function being a polynomial of finite degree, said polynomial containing coefficients, said coefficients representing parameters (302), which parameters (302) can be unambiguously assigned to a piezoelectric measuring element (36, 36a, 36b); one or more numerical values are used as parameters (302), which parameters (302) are at least one previously determined sensitivity and at least one previously determined linearity of the associated piezoelectric measuring element (36, 36a, 36b); the calibration function (301) generates a calibrated digital charge signal (205) using the digital charge signal (203) of a piezoelectric measuring element (36, 36a, 36b) as a variable; the calibration function (301) generates a linear relationship between the wheel load acting on the piezoelectric measuring element (36, 36a, 36b) and the amount of the calibrated digital charge signal (205), whereby a measurement accuracy in determining the wheel load is increased.

12. The method of calibrating a WIM sensor (10) according to claim 10, **characterized in that** a calibration function (301) is used which is a mathematical function being a polynomial of finite degree containing polynomial coefficients, said coefficients representing parameters (302), which parameters (302) can be unambiguously assigned to a piezoelectric measuring element (36, 36a, 36b); one or more numerical values are used as parameters (302), which parameters (302) are at least one previously determined sensitivity and at least one previously determined linearity and at least one previously determined temperature dependence of the associated piezoelectric measuring element (36, 36a, 36b); the calibration function (301) generates a calibrated digital charge signal (205) using the digital charge signal (203) of a piezoelectric measuring element (36, 36a, 36b) as a variable and the digital sensor signal (204) as a variable; wherein the sensor (70) of the digital sensor signal (204) is a temperature sensor detecting a temperature of the piezoelectric measuring element (36, 36a, 36b); and **in that** the calibration function (301) generates a linear relationship between the force acting on the piezoelectric measuring element (36, 36a, 36b) and the amount of the calibrated digital charge signal (205) thereby minimizing the dependence of the calibrated digital charge signal (205) from the temperature of the piezoelectric measuring element (36, 36a, 36b) and increasing a measurement accuracy in the determination of the wheel load.

13. The method according to any of claims 11 to 12, **characterized in that** an algorithm determines the calibration function, defined forces of different amounts are applied one after the other onto the piezoelectric measuring element (36, 36a, 36b) and the algorithm records the digital charge signal (203) corresponding to the defined force; by means of polynomial interpolation known from numerical mathematics the algorithm determines the interpolation polynomial resulting in said forces using the digital charge signal (203) as a variable; said interpolation polynomial is the calibration function (301) which generates the calibrated digital charge signal (205) using the digital charge signal (203) as a variable; **in that** the algorithm saves the determined calibration function (301) together with a time stamp (208) on a nonvolatile memory element (81).

14. A method for producing a WIM sensor (10) according to any of claims 1 to 10, **characterized in that** two support elements (30, 30a, 30b, 30c) are connected by form or force closure by means of at least two connecting elements (46, 47) to form a support (90), said connecting elements (46, 47) comprising the support elements (30, 30a, 30b, 30c) at at least one end thereof; the support (90) consists of at least two support elements (30, 30a, 30b, 30c) connected to one another; and **in that** the support (90) is easily inserted in a clamped hollow profile (11) of a WIM sensor (10).

15. The method for producing a WIM sensor (10) according to claim 14, **characterized in that** at least one electrode film (39) is inserted in the clamped hollow profile (11) together with the support (90).

## Revendications

1. Capteur WIM (10) pour déterminer les charges de roue exercées par un véhicule à roues (2a, 2b, 2c, 2d) se déplaçant sur un segment de route (1) lorsqu'une roue dudit véhicule à roues (2a, 2b, 2c, 2d) traverse le capteur WIM; ledit capteur WIM (10) étant disposé dans ledit segment de route (1) dans la surface de celle-ci à fleur avec la surface de route du segment de route (1); ledit capteur WIM (10) étant réalisé sous forme d'un profil creux (11) à extension longitudinale s'allongeant le long d'un axe longitudinal (X-X'), ledit profil creux (11) enfermant au moins un premier espace (12); dans lequel une pluralité d'éléments de mesure piézoélectriques (36, 36a, 36b) est disposée dans ledit premier espace (12) le long dudit axe longitudinal (X-X`), chacun desdits éléments de mesure piézoélectriques (36, 36a, 36b) comprenant une première surface de réception de force (15, 15a, 15b) et une seconde surface de réception de force (16, 16a, 16b), dans lequel des charges de roue agissent sur lesdits éléments de mesure piézoélectriques (36, 36a, 36b) lorsque la traversée d'une roue dudit véhicule à roues (2a, 2b, 2c, 2d); dans lequel chaque élément de mesure piézoélectrique (36, 36a, 36b) génère sur la première surface de réception de force (15, 15a, 15b) et la seconde surface de réception de force (16, 16a, 16b) des charges électriques proportionnelles à la charge de roue exercée; **caractérisé en ce qu'**au moins un élément de support (30, 30a, 30b, 30c) est disposé dans ledit premier espace (12); **en ce que** l'élément de support (30, 30a, 30b, 30c) fixe au moins un élément de mesure piézoélectrique (36, 36a, 36b); **en ce qu'**au moins un élément électronique (45) est disposé dans le premier espace (12); **en ce que** ledit élément de support (30, 30a, 30b, 30c) fixe au moins un élément électronique (45); **en ce qu'**au moins un conducteur de charges électriques (61a, 61b) est disposé dans le premier espace (12); ledit conducteur de charges électriques (61a, 61b) connectant électriquement au moins une surface de réception de force (15, 15a, 15b) et l'élément électronique (45); et **en ce que** le conducteur de charges électriques (61a, 61b) conduit un signal de charges (201a, 201b) depuis au moins une surface de réception de force (15, 15a, 15b, 16, 16a, 16b) vers l'élément électronique (45).

2. Capteur WIM (10) selon la revendication 1, **caractérisé en ce qu'**une première surface de pression (13) et une seconde surface de pression (14) sont disposés dans le premier espace (12); lesdites surfaces de pression (13, 14) étant agencées l'une en face de l'autre, **en ce que** ladite première surface de réception de force (15, 15a, 15b) et ladite seconde surface de réception de force (16, 16a, 16b) faisant face respectivement à une surface de pression (13, 14); lesdites surfaces de pression (13, 14) agissant directement ou indirectement sur les surfaces de réception de force (15, 15a, 15b, 16, 16a, 16b); dans lequel ladite action indirecte des surfaces de pression (13, 14) sur les surfaces de réception de force (15, 15a, 15b, 16, 16a, 16b) se produit par l'intermédiaire d'au moins un premier élément d'introduction de force (34, 34a, 34b) et d'un second élément d'introduction de force (35, 35a, 35b), lesquels éléments d'introduction de force (34, 34a, 34b, 35, 35a, 35b) étant disposés entre une surface de pression (13, 14) et une surface de réception de force (15, 15a, 15b, 16, 16a, 16b); **en ce qu'**un film d'électrode (39) est disposé entre la seconde surface de réception de force (16, 16a, 16b) et la seconde surface de pression (14), ledit film d'électrode (39) comprenant un film isolant (37); **en ce que** ledit film isolant (37) est fabriqué d'un matériau électriquement isolant; **en ce que** ledit film isolant (37) isole électriquement l'une de l'autre la seconde surface de réception de force (16, 16a, 16b) et la seconde surface de pression (13, 14); dans lequel ledit film d'électrode (39) comprend une couche électriquement conductrice (38) sur au moins le côté du film isolant (37) qui fait face à la seconde surface de réception de force (16, 16a, 16b); **en ce que** la couche électriquement conductrice (38) est subdivisée en au moins deux régions électriquement conductrices (38a, 38b) sur ledit côté qui fait face à la seconde surface de réception de force (16, 16a, 16b); et **en ce que** le film d'électrode (39) comprend une isolation électrique entre lesdites régions électriquement conductrices (38a, 38b) de la couche électriquement conductrice (38).

3. Capteur WIM (10) selon la revendication 2, **caractérisé en ce qu'**au moins une région électriquement conductrice (38a, 38b) du film d'électrode (39) est connectée au second élément d'introduction de force (35, 35a, 35b) par une liaison de force; **en ce que** ladite liaison de force entre le second élément d'introduction de force (35, 35a, 35b) et la région électriquement conductrice (38a, 38b) du film d'électrode (37) génère un contact électrique entre le second élément d'introduction de force (35, 35a, 35b) et la région électriquement conductrice (38a, 38b) du film d'électrode (39); **en ce qu'**un contact électrique est généré entre la seconde surface de réception de force (16, 16a, 16b) et la région électriquement conductrice (38a, 38b) par l'intermédiaire du second élément d'introduction de force (35, 35a, 35b); et **en ce que** les secondes surfaces de réception de force (16, 16a, 16b) des différents éléments de mesure piézoélectriques (36, 36a, 36b) sont isolées électriquement les unes des autres grâce à l'isolation électrique entre les régions électriquement conductrices (38a, 38b).

4. Capteur WIM (10) selon la revendication 3, **caractérisé en ce qu'**un élément électronique (45) fixé à l'élément de support (30, 30a, 30b, 30c) comprend au moins un contact à ressort (48a, 48b, 50a, 50b); ledit contact à ressort (48a, 48b, 50a, 50b) étant réalisé de manière élastique; ledit contact à ressort (48a, 48b, 50a, 50b) étant réalisé de manière électriquement conductrice; **en ce que** le contact à ressort (48a, 48b, 50a, 50b) est connecté de manière électriquement conductrice à l'élément électronique; dans lequel ledit contact à ressort (48a, 48b, 50a, 50b) comprend une surface de contact à ressort (49a, 49b, 51a, 51b); **en ce que** ledit contact à ressort (48a, 48b, 50a, 50b), en état monté dans le profil creux (11), est précontraint entre l'élément électronique (45) et une surface de contact; **en ce que** le contact à ressort (48a, 48b, 50a, 50b) précontraint exerce une force de ressort mécanique définie sur ladite surface de contact par l'intermédiaire d'une surface de contact à ressort (49a, 49b, 51a, 51b); **en ce que** ladite surface de contact à ressort (49a, 49b, 51a, 51b) est reliée à la surface de contact par une liaison de force; dans lequel l'élément électronique (45) est connecté de manière électriquement conductrice à la surface de contact par l'intermédiaire du contact à ressort (48a, 48b, 50a, 50b) et de la connexion par liaison de force entre ladite surface de contact et ladite surface de contact à ressort (49a, 49b, 51a, 51b); et **en ce que** la surface de contact est un film d'électrode (37) ou une surface de pression (13, 14) du profil creux (11).

5. Capteur WIM (10) selon la revendication 4, **caractérisé en ce qu'**un premier conducteur de charges électriques (61a, 61b) reliant électriquement la première surface de réception de force (15, 15a, 15b) de l'élément de mesure piézoélectrique (36, 36a, 36b) à l'élément électronique (45) est formé par le premier contact à ressort (50a, 50b), le contact électrique entre le premier contact à ressort (50a, 50b) et la première surface de pression (13) du profil creux (11), ledit profil creux (11), le contact électrique entre le profil creux (11) et le premier élément d'introduction de force (34, 34a, 34b) et ledit premier élément d'introduction de force (34, 34a, 34b); **en ce que** ledit premier conducteur de charges électriques (61a, 61b) conduit un premier signal de charges (201a); **en ce qu'**un second conducteur de charges électriques (61a, 61b) reliant électriquement la seconde surface de réception de force (16, 16a, 16b) de l'élément de mesure piézoélectrique (36, 36a, 36b) à l'élément électronique (45) est formé par le second contact à ressort (48a, 48b), le contact électrique entre le second contact à ressort (48a, 48b) et le film d'électrode (39), ledit film d'électrode (39), le contact électrique entre le film d'électrode (39) et le second élément d'introduction de force (35, 35a, 35b) et ledit second élément d'introduction de force (35, 35a, 35b); et **en ce que** ledit second conducteur de charges électriques (61a, 61b) conduit un second signal de charges (201b).

6. Capteur WIM (10) selon la revendication 5, **caractérisé en ce qu**'au moins un amplificateur de charge (21) et au moins un convertisseur A/N (22) sont agencés sur l'élément électronique (45) qui est fixé à l'élément de support (30, 30a, 30b, 30c); en ce que l'amplificateur de charge (21) convertit le signal de charges (201a, 201b) d'un élément de mesure piézoélectrique (36, 36a, 36b) en un signal d'amplificateur de charge (202a, 202b); en ce que le convertisseur A/N (22) convertit ledit signal d'amplificateur de charge (202a, 202b) en un signal numérique de charges (203); et en ce que ledit convertisseur A/N (22) fournit le signal numérique de charges (203) en tant que signal de sortie.

7. Capteur WIM (10) selon la revendication 6, **caractérisé en ce que** la distance parcourue par une charge électrique entre la première surface de réception de force (15, 15a, 15b) ou la seconde surface de réception de force (16, 16a, 16b) de l'élément de mesure piézoélectrique (20, 20a, 20b) et l'amplificateur de charge (21) de l'élément électronique (45) est de 20 mm au maximum et **en ce que** ladite distance qui est inférieure ou égale à 20 mm minimise l'occurrence des interférences électriques et du bruit de fond dans le signal de charges (201).

8. Capteur WIM (10) selon l'une quelconque des revendications 1 à 7, **caractérisé en ce qu**'un élément de support (30c) comprend une pluralité de parties d'élément de support (91); et en ce que lesdites parties d'élément de support (91) sont reliées à un élément de support (30c) par une liaison de forme, de force ou de matière.

9. Capteur WIM (10) selon l'une quelconque des revendications 6 à 8, **caractérisé en ce qu'**au moins un élément d'évaluation (80) est disposé dans un espace (12) du capteur WIM (10); **en ce qu'**un élément de connexion (52) pour connecter un conducteur de signaux électriques (60) est agencé sur l'élément d'évaluation (80); **en ce qu'**un élément de connexion (52) pour connecter le conducteur de signaux électriques (60) est agencé sur l'élément électronique (45); **en ce qu'**au moins un conducteur de signaux électriques (60) est disposé dans l'espace (12); dans lequel ledit conducteur de signaux électriques (60) relie électriquement en série l'élément de connexion (52) de l'élément d'évaluation (80) et les éléments de connexion (52) d'au moins deux éléments électroniques (45); et **en ce que** les éléments électroniques (45) transmettent les signaux numériques de charge (203) fournis à l'élément d'évaluation (80) par l'intermédiaire du conducteur de signaux électriques (60) .

10. Capteur WIM (10) selon la revendication 9, **caractérisé en ce qu**'au moins une sonde de mesure (70) est disposé dans un espace (12) du capteur WIM (10); en ce que ladite sonde de mesure (70) mesure un grandeur physique en tant que signal de sonde de mesure (207); en ce que le convertisseur A/N (22) convertit le signal de sonde de mesure (207) en un signal numérique de sonde de mesure (204) et le fournit au niveau de l'élément de connexion (52); et en ce que le signal numérique de sonde de mesure (204) fourni est disponible dans l'élément d'évaluation (80) par l'intermédiaire du conducteur de signaux électriques (60).

11. Procédé pour l'étalonnage d'un capteur WIM (10) selon l'une quelconque des revendications 6 à 9, **caractérisé en ce qu**'on utilise une fonction d'étalonnage (301) qui est une fonction mathématique étant un polynôme de degré fini, ledit polynôme contenant des coefficients, lesdits coefficients représentant des paramètres (302), lesquels paramètres (302) peuvent être affectés de façon univoque à un élément de mesure piézoélectrique (36, 36a, 36b); en ce qu'on utilise comme paramètre (302) une valeur numérique ou une pluralité des valeurs numériques, lesdits paramètres (302) étant au moins une sensibilité prédéterminée et une linéarité prédéterminée de l'élément de mesure piézoélectrique (36, 36a, 36b) affecté; en ce que la fonction d'étalonnage (301) génère, en utilisant le signal numérique de charges (203) d'un élément de mesure piézoélectrique (36, 36a, 36b) en tant que variable, un signal numérique de charges étalonné (205); en ce que la fonction d'étalonnage (301) génère une relation linéaire entre la charge de roue agissant sur l'élément de mesure piézoélectrique (36, 36a, 36b) et l'amplitude du signal numérique de charges étalonné (205) de manière à augmenter une précision de mesure dans la détermination de la charge de roue.

12. Procédé pour l'étalonnage d'un capteur WIM (10) selon la revendication 10, **caractérisé en ce qu**'on utilise une fonction d'étalonnage (301) qui est une fonction mathématique étant un polynôme de degré fini, ledit polynôme contenant des coefficients, lesdits coefficients représentant des paramètres (302), lesquels paramètres (302) peuvent être affectés de façon univoque à un élément de mesure piézoélectrique (36, 36a, 36b); en ce qu'on utilise comme paramètre (302) une valeur numérique ou une pluralité des valeurs numériques, lesdits paramètres (302) étant au moins une sensibilité prédéterminée et une linéarité prédéterminée et une dépendance de la température prédéterminée de l'élément de mesure piézoélectrique (36, 36a, 36b) affecté; en ce que la fonction d'étalonnage (301) génère, en utilisant le signal numérique de charges (203) d'un élément de mesure piézoélectrique (36, 36a, 36b) en tant que variable et en utilisant le signal numérique de sonde de mesure (204) en tant que variable, un signal numérique de charges étalonné (205); en ce que ladite sonde de mesure (70) du signal numérique de sonde de mesure (204) est une sonde de température détectant une température de l'élément de mesure piézoélectrique (36, 36a, 36b); et en ce que la fonction d'étalonnage (301) génère une relation linéaire entre la force agissant sur l'élément de mesure piézoélectrique (36, 36a, 36b) et l'amplitude du signal numérique de charges étalonné (205) de manière à minimiser la dépendance du signal numérique de charges étalonné (205) de la température de l'élément de mesure piézoélectrique (36, 36a, 36b) et à augmenter une précision de mesure dans la détermination de la charge de roue.

13. Procédé selon l'une quelconque des revendications 11 à 12, **caractérisé en ce que** la fonction d'étalonnage est déterminée selon un algorithme, **en ce que** des forces définies et de valeurs différentes agissent en une séquence sur l'élément de mesure piézoélectrique (36, 36a, 36b) et l'algorithme enregistre le signal numérique de charges (203) avec la force définie; **en ce que** l'algorithme détermine, par l'interpolation polynomiale connue des mathématiques numériques, le polynôme d'interpolation qui donne lesdites forces avec le signal numérique de charges (203) en tant que variable; **en ce que** ledit polynôme d'interpolation est la fonction d'étalonnage (301) qui génère en utilisant le signal numérique de charges (203) en tant que variable le signal numérique de charges étalonné (205); **en ce que** l'algorithme enregistre la fonction d'étalonnage (301) déterminée avec un horodatage (208) sur un élément de mémoire non volatile (81).

14. Procédé de fabrication d'un capteur WIM (10) selon l'une quelconque des revendications 1 à 10, **caractérisé en ce qu**'on relie deux éléments de support (30, 30a, 30b, 30c) en utilisant au moins deux éléments de connexion (46, 47) par liaison de forme ou de force pour former un support (90), lesdits éléments de connexion (46, 47) comprenant les éléments de support (30, 30a, 30b, 30c) à au moins une extrémité de ceux-ci; en ce que ledit support (90) est constitué d'au moins deux éléments de support (30, 30a, 30b, 30c) reliés l'un à l'autre; et en ce que le support (90) s'insère facilement dans un profil creux (11) monté d'un capteur WIM (10).

15. Procédé de fabrication d'un capteur WIM (10) selon la revendication 14, **caractérisé en ce qu**'au moins un film d'électrode (39) est inséré avec le support (90) dans le profil creux (11) monté.
